# EUROPEAN PATENT APPLICATION

(11) **EP 4 572 547 A1**
(43) Date of publication of application: **18.06.2025**
(21) Application number: 23868487.2
(22) Date of filing: 13.09.2023
(51) Int. Cl.: H05K 5/06, H04M 1/02, G06F 1/16

(54) **WATERPROOF STRUCTURE, AND ELECTRONIC DEVICE COMPRISING WATERPROOF STRUCTURE**

(30) Priority: 19.09.2022 KR 20220117594; 11.10.2022 KR 20220129512
(71) Applicant: Samsung Electronics Co., Ltd., Suwon-si, Gyeonggi-do 16677 (KR)
(72) Inventor: CHO, Sunggun, Suwon-si, Gyeonggi-do 16677 (KR); BAIK, Jinwook, Suwon-si, Gyeonggi-do 16677 (KR); YOON, Byounguk, Suwon-si, Gyeonggi-do 16677 (KR); SHIN, Moonchul, Suwon-si, Gyeonggi-do 16677 (KR); YOON, Yeonggyu, Suwon-si, Gyeonggi-do 16677 (KR)
(74) Representative: HGF
(86) International application number: PCT/KR2023/013747
(87) International publication number: WO 2024/063433

(57) **Abstract**

An electronic device according to an embodiment of the present disclosure may comprise a first housing in which a first substrate is arranged and which comprises a first partition wall unit that faces a part of the first substrate and has a first insertion hole formed therein. This electronic device may comprise a second housing having a second substrate arranged therein, comprising a second partition wall unit that faces a part of the second substrate and has a second insertion hole formed therein, and slidably coupled to the first housing. In addition, the electronic device may comprise a flexible display arranged to be supported by the first housing and the second housing, and having a display area reduced or extended on the basis of slide-in or slide-out of the second housing. In addition, the electronic device may comprise a connection member formed of a bendable material and having one end connected to the first substrate by passing through the first insertion hole and the other end connected to the second substrate by passing through the second insertion hole. In addition, the electronic device may comprise: a first bracket arranged in the first housing and facing the first insertion hole; and a first waterproof member arranged between the first partition wall unit and the first bracket.

## Description

### [Technical Field]

Various embodiments disclosed herein relate to a waterproof structure and an electronic device including the same. Various embodiments may relate to, for example, a waterproof structure applied to a rollable electronic device in which a first housing and a second housing are slidably coupled.

### [Background Art]

A display may serve a key function in a portable electronic device. The display may visually display information. Factors such as the design, size, and quality of a display may play a significant role in consumers' choice of an electronic device.

With recent advancements in display technology, flexible displays have been launched into the market. By using such flexible displays, displays with variable display screen sizes may also be implemented. For example, electronic devices are also being developed that include displays that are capable of increasing or decreasing screen size through sliding or that roll onto a specific mechanical element.

### [Disclosure of Invention]

### [Technical Problem]

A rollable electronic device may include multiple housings that move relative to each other by slide-in or slide-out movement. Electronic components may be separately disposed in the multiple housings, and a substrate (a printed circuit board) connected to these electronic components may be disposed in each of the housings. The substrates disposed in the multiple housings may each be located within a waterproof structure.

Meanwhile, within the rollable electronic device, a connecting member (a flexible printed circuit board (FPCB)) that electrically connects the multiple substrates disposed inside the waterproof structures may be arranged to be bent in response to the sliding movement in the electronic device. As the connecting member passes through the waterproof areas to be connected with the multiple substrates, additional sealing may be required in the area where the connecting member passes.

An embodiment disclosed herein provides a sealing structure that seals an area through which a connecting member passes while optimizing the layout of electronic components in the rollable electronic device.

### [Solution to Problem]

An electronic device according to an embodiment of the disclosure may include a first housing including a first substrate disposed therein and a first partition wall that faces a portion of the first substrate. The first partition wall has a first insertion hole formed therein. The electronic device may include a second housing including a second substrate disposed therein and a second partition wall that faces a portion of the second substrate. The second partition wall has a second insertion hole formed therein, and the second housing is slidably coupled to the first housing. In addition, the electronic device may include a flexible display disposed to be supported by the first housing and the second housing. The flexible display has a display area configured to be contracted or expanded based on slide-in or slide-out of the second housing. In addition, the electronic device may include a connecting member made of a bendable material. The connecting member has one end passing through the first insertion hole to be connected to the first substrate, and the other end passing through the second insertion hole to be connected to the second substrate. Furthermore, the electronic device may include a first bracket disposed in the first housing to face the first insertion hole, and a first waterproof member disposed between the first partition wall and the first bracket.

A waterproof structure according to an embodiment of the disclosure may include a first housing including a first substrate disposed therein and a first partition wall that faces a portion of the first substrate. The first substrate has a first insertion hole formed therein. In addition, the waterproof structure may include a second housing including a second substrate disposed therein and a second partition wall that faces a portion of the second substrate. The second partition wall has a second insertion hole formed therein, and the second housing is slidably coupled to the first housing. In addition, the electronic device may include a flexible display disposed to be supported by the first housing and the second housing. The flexible display has a display area configured to be contracted or expanded based on slide-in or slide-out of the second housing. In addition, the electronic device may include a connecting member made of a bendable material. The connecting member has one end passing through the first insertion hole to be connected to the first substrate, and the other end passing through the second insertion hole to be connected to the second substrate. In addition, the waterproof structure may include a first bracket including a first support portion disposed in the first housing to press one end of the first connecting member in a first direction and facing the first insertion hole, and a first waterproof member disposed between the first partition wall and the first bracket.

A waterproof structure according to an embodiment may include a first housing including a first substrate disposed therein and a first partition wall that faces a portion of the first substrate, the first substrate having a first insertion hole formed therein, a second housing including a second substrate disposed therein and a second partition wall that faces a portion of the second substrate, the second partition wall having a second insertion hole formed therein, and the second housing being slidably coupled to the first housing, a flexible display disposed to be supported by the first housing and the second housing, the flexible display having a display area configured to be contracted or expanded based on slide-in or slide-out of the second housing, a connecting member made of a bendable material and having one end passing through the first insertion hole and the other end passing through the second insertion hole, a first bracket including a first support portion disposed in the first housing to press one end of the first connecting member in a first direction and facing the first insertion hole, a second bracket including a second support portion disposed in the second housing to press the other end of the connecting member in the first direction and facing the second insertion hole, and a waterproof member disposed between the first partition wall and the first bracket and between the second partition wall and the second bracket.

### [Advantageous Effects of Invention]

According to one embodiment disclosed herein, it may be possible to provide a sealing structure that seals the area through which a connecting member passes (e.g., the first insertion hole of the first housing and the second insertion hole of the second housing) while optimizing the layout of electronic components within the electronic device.

In addition, the area through which the connecting member passes may be provided to correspond to the sliding direction of the electronic device, considering the sliding operation of the electronic device and the layout of electronic components.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIGS. 2A and 2B are views illustrating front and rear surfaces of an electronic device according to an embodiment of the disclosure in a slide-in state.
FIGS. 3A and 3B are views illustrating front and rear surfaces of the electronic device according to an embodiment of the disclosure in a slide-out state.
FIG. 4 is an exploded perspective view of the electronic device according to an embodiment of the disclosure.
FIG. 5A is a cross-sectional view of the electronic device according to an embodiment of the disclosure taken along line 5a-5a in FIG. 2A.
FIG. 5B is a cross-sectional view illustrating the electronic device according to an embodiment of the disclosure in an intermediate state.
FIG. 5C is a cross-sectional view of the electronic device according to an embodiment of the disclosure taken along line 5c-5c in FIG. 3A.
FIG. 6A is an exploded perspective view of a support bracket and a second side member according to an embodiment of the disclosure.
FIG. 6B is a cross-sectional view of the electronic device according to an embodiment of the disclosure, taken along line A-A of FIG. 6A.
FIG. 6C is an exploded perspective view illustrating a waterproof structure for an insertion hole, according to an embodiment of the disclosure.
FIG. 7 is a view illustrating the state in which the first bracket and the second bracket are not overlapping when the electronic device is in a slide-in state, according to an embodiment of the disclosure.
FIG. 8A illustrates a perspective view and plan view of a bracket according to an embodiment of the disclosure.
FIG. 8B illustrates a perspective view and plan view of a seating portion provided on a partition wall according to an embodiment of the disclosure.
FIG. 8C is a view showing a connecting member according to an embodiment of the disclosure.
FIG. 9A is a view illustrating a state in which a bracket and a waterproof member are disposed in the seating portion provided on a partition wall.
FIG. 9B is a plan view of FIG. 9A.
FIG. 9C is a rear perspective view of the bracket illustrated in FIG. 9A.
FIG. 10A is a view of an electronic device cut along line B-B in FIG. 9A.
FIG. 10B is a cross-sectional view of FIG. 10A cut along line C-C.
FIG. 11A is a view illustrating a state in which a shielding member is disposed on the partition wall of FIG. 9A.
FIG. 11B is a plan view of FIG. 11A, illustrating a state in which the shielding member is disposed on the partition wall.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

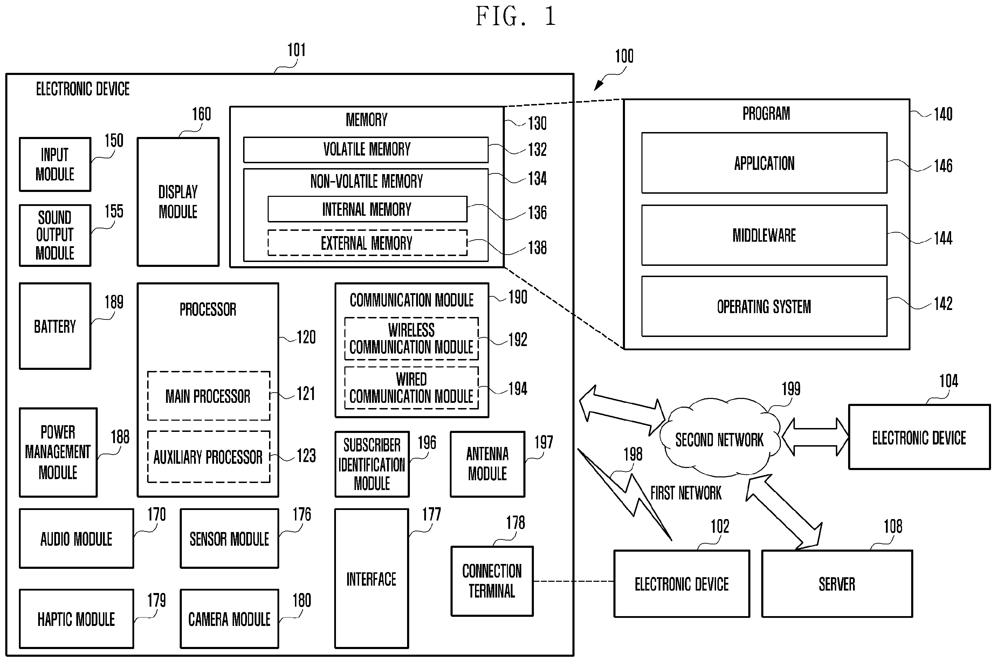

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

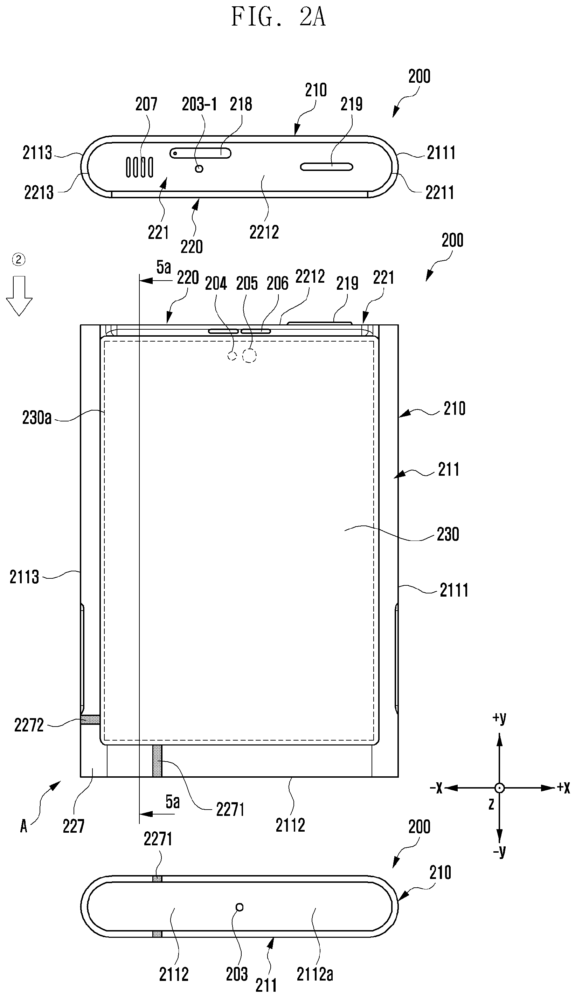

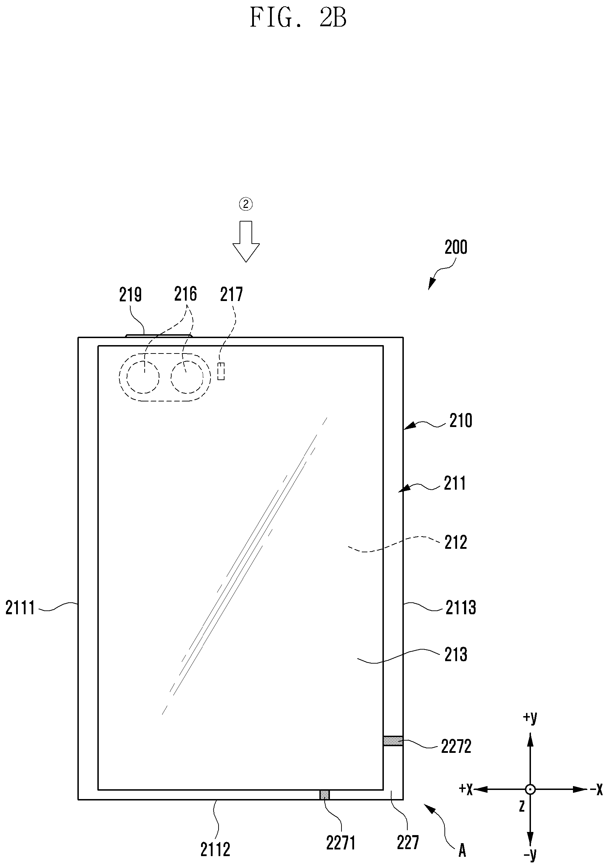

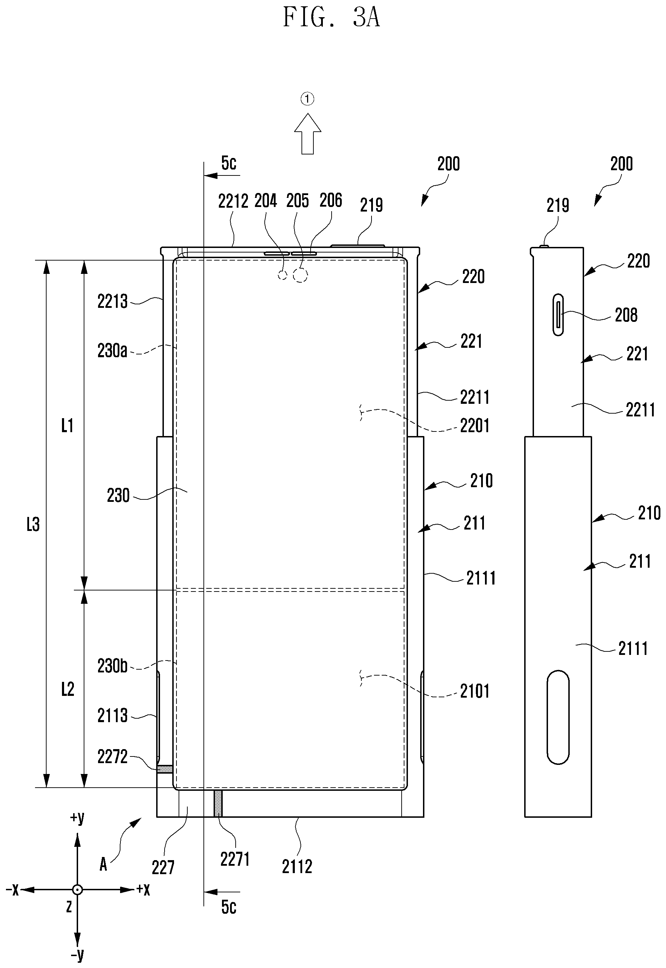

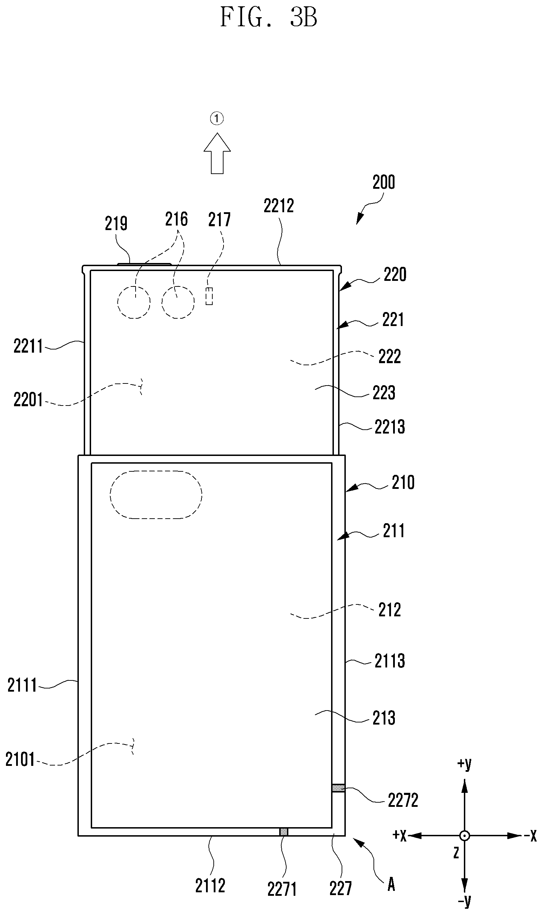

FIGS. 2A and 2B are views illustrating front and rear surfaces of an electronic device according to various embodiments of the disclosure in a slide-in state. FIGS. 3A and 3B are views illustrating front and rear surfaces of the electronic device according to various embodiments of the disclosure in a slide-out state.

The electronic device 200 of FIGS. 2A to 3B may be at least partially similar to the electronic device 101 of FIG. 1 or may further include embodiments of the electronic device.

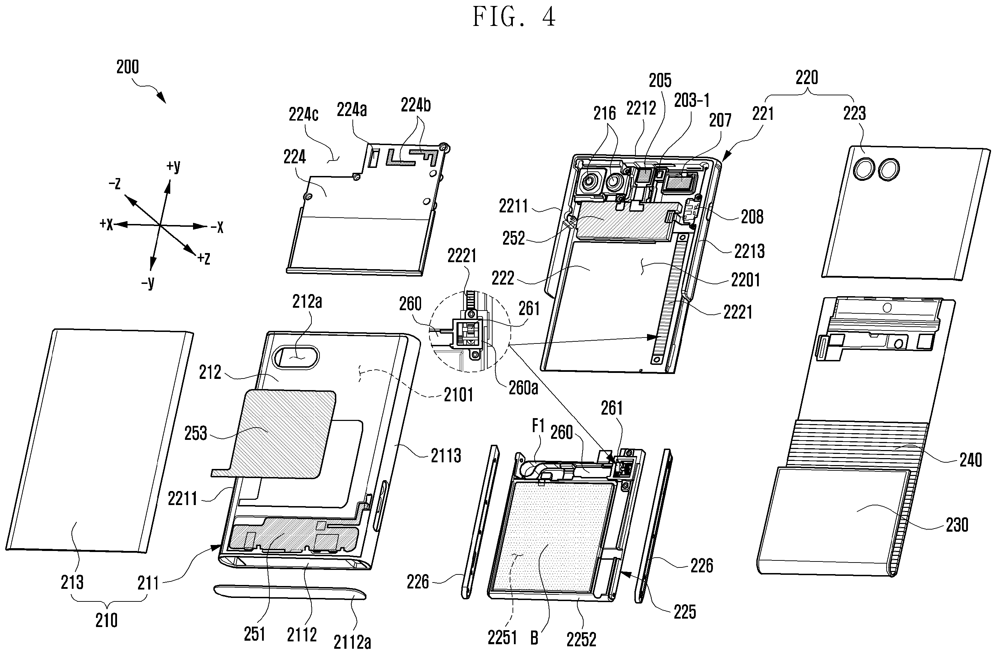

Referring to FIGS. 2A to 3B, the electronic device 200 may include a first housing 210, a second housing 220 coupled to be slidable in a predetermined direction (e.g., in direction ① or direction ②) (e.g., the ±y-axis direction) from the first housing 210, and a flexible display 230 (e.g., a rollable display, an expandable display, or a stretchable display) disposed to be supported by at least a portion of the first and second housings 210 and 220. In an embodiment, the second housing 220 may be slidably coupled to the first housing 210 to be extended in a first direction (direction ①) or retracted in a second direction (direction ②) opposite to the first direction (direction ①) with respect to the first housing 210. In an embodiment, the electronic device 200 may be switched to the slide-in state (e.g., a retraction state) when at least a portion of the second housing 220 is accommodated in at least a portion of a first space 2101 defined by the first housing 210. In an embodiment, the electronic device 200 may be switched to the slide-out state (e.g., an extension state) by when at least a portion of the second housing 220 is moved from the first space 2101 in the outward direction (e.g., direction ①). In an embodiment, the electronic device 200 may include a support member (e.g., the support member 240 in FIG. 4) (e.g., a bendable member, a bendable support member, an articulated hinge module, or a multi-bar assembly), which at least partially defines the same plane as at least a portion of the second housing 220 in the slide-in state and which is at least partially bent and accommodated into the first space 2101 in the first housing 210 in the slide-in state. In an embodiment, the flexible display 230 may be disposed in such a way that at least a portion thereof is attached to at least a portion of the second housing 220. In an embodiment, the remaining portion of the flexible display 230 may be at least partially attached to the support member 240 (e.g., the support member 240 in FIG. 4). According to an embodiment, in the slide-in state, at least a portion of the flexible display 230 may be accommodated into the first space 2101 of the first housing 210 in a bending manner while being supported by the support member (e.g., the support member 240 in FIG. 4), thereby being disposed to be invisible from the outside. In an embodiment, in the slide-out state, at least a portion of the flexible display 230 may be disposed to be visible from the outside while being supported by the support member (e.g., the support member 240 in FIG. 4), which at least partially defines the same plane as the second housing 220.

According to an embodiment, the electronic device 200 may include a first housing 210 including a first side surface member 211 and a second housing 220 including a second side surface member 221. In an embodiment, the first side surface member 211 may include a first side surface 2111 having a first length along a first direction (e.g., the y-axis direction), a second side surface 2112 extending from the first side surface 2111 along a direction substantially perpendicular to the first side surface 2111 (e.g., the x-axis direction) to have a second length smaller than the first length, and a third side surface 2113 extending from the second side surface 2112 to be substantially parallel to the first side surface 2111 and having the first length. In an embodiment, the first side surface member 211 may be at least partially made of a conductive member (e.g., metal). In some embodiments, the first side surface member 211 may be formed by coupling a conductive member and a non-conductive member (e.g., polymer). In an embodiment, the first housing 210 may include a first extension member 212 extending from at least a portion of the first side surface member 211 to at least a portion of the first space 2101. In an embodiment, the first extension member 212 may be integrated with the second side surface member 211. In some embodiments, the first extension member 212 may be formed separately from the first side surface member 211 and structurally coupled to the first side surface member 211.

According to an embodiment, the second side surface member 221 may include a fourth side surface 2211 at least partially corresponding to the first surface 2111 and having a third length, a fifth side surface 2212 extending from the fourth side surface 2211 in a direction substantially parallel to the second side surface 2112 and having a fourth length smaller than the third length, and a sixth side surface 2213 extending from the fifth side surface 2212 to correspond to the third side surface 2113 and having the third length. In an embodiment, the second side surface member 221 may be at least partially made of a conductive member (e.g., metal). In some embodiments, the second side surface member 221 may be formed by coupling a conductive member and a non-conductive member (e.g., polymer). In an embodiment, at least a portion of the second side surface member 221 may include a second extension member 222 extending to at least a portion of the second space 2201 in the second housing 220. In an embodiment, the second extension member 222 may be integrated with the second side surface member 221. In some embodiments, the second extension member 222 may be formed separately from the second side surface member 221 and structurally coupled to the second side surface member 221.

According to an embodiment, the first side surface 2111 and the fourth side surface 2211 may be slidably coupled to each other. In an embodiment, the third side surface 2113 and the sixth side surface 2213 may be slidably coupled to each other. In an embodiment, in the slide-in state, the fourth side surface 2211 may be disposed to be substantially invisible from the outside by overlapping the first side surface 2111. In an embodiment, in the slide-in state, the sixth side surface 2213 may be disposed to be substantially invisible from the outside by overlapping the third side surface 2113. In some embodiments, at least a portion of the fourth and sixth side surfaces 2211 and 2213 may be disposed to be at least partially visible from the outside in the slide-in state. In an embodiment, in the slide-in state, the second extension member 222 may be disposed to be substantially invisible from the outside by overlapping the first extension member 212. In some embodiments, the second extension member 222 may be disposed to be at least partially visible from the outside in the slide-in state.

According to an embodiment, the first housing 210 may include a first rear surface cover 213 coupled to at least a portion of the first side surface member 211. In an embodiment, the first rear surface cover 213 may be disposed by being coupled to at least a portion of the first extension member 212. In some embodiments, the first rear surface cover 213 may be integrated with the first side surface member 211. In an embodiment, the first rear surface cover 213 may be made of polymer, coated or tinted glass, ceramic, metal (e.g., aluminum, stainless steel (STS), or magnesium), or a combination of at least two of these materials. In some embodiments, the first rear surface cover 213 may extend to at least a portion of the first side surface member 211. In some embodiments, the first rear surface cover 213 may be omitted, and at least a portion of the first extension member 212 may be replaced with the first rear surface cover 213.

According to various embodiments, the second housing 220 may include a second rear surface cover 223 coupled to at least a portion of the second side surface member 221. In an embodiment, the second rear surface cover 223 may be disposed by being coupled to at least a portion of the second extension member 222. In some embodiments, the second rear surface cover 223 may be integrated with the second side surface member 221. In an embodiment, the second rear surface cover 223 may be made of polymer, coated or tinted glass, ceramic, metal (e.g., aluminum, stainless steel (STS), or magnesium), or a combination of at least two of these materials. In some embodiments, the second rear surface cover 223 may extend to at least a portion of the second side surface member 221. In some embodiments, the second rear surface cover 223 may be omitted, and at least a portion of the second extension member 222 may be replaced with the second rear surface cover 223.

According to an embodiment, the flexible display 230 may include a first portion 230a (e.g., a flat portion) that is always visible from the outside, and a second portion 230b (e.g., a bendable portion or a bending portion) that extends from the first portion 230a and is at least partially bent and accommodated into the first space 2101 of the first housing 210 to be invisible from the outside in the slide-in state. In an embodiment, the first portion 230a may be disposed to be supported by the second housing 220, and the second portion 230b may be disposed to be at least partially supported by a support member (e.g., the support member 240 in FIG. 4). In an embodiment, in the state in which the second housing 220 is slid out along the first direction (direction ①), the second portion 230b of the flexible display 230 may define substantially the same plane as the first portion 230a while being supported by the support member (e.g., the support member 240 in FIG. 4), and may be disposed to be visible from the outside. In an embodiment, in the state in which the second housing 220 is slid in along the second direction (direction ②), the second portion 230b of the flexible display 230 may be disposed to be bent and accommodated into the first space 2101 of the first housing 210 and to be invisible from the outside. Accordingly, in the flexible display 230, the display area may be variable since the second housing 220 is moved in a sliding manner from the first housing 210 in a predetermined direction (e.g., the y-axis direction).

According to an embodiment, the flexible display 230 may be variable in length in the first direction (direction ①) depending on the sliding of the second housing 220 that is moved with respect to the first housing 210. For example, in the slide-in state, the flexible display 230 may have a first display area corresponding to the first length L1 (e.g., an area corresponding to the first portion 230a). In an embodiment, in the slide-out state, depending on the sliding of the second housing 220 further moved by a second length L2 with respect to the first housing 210, the flexible display 230 may be expanded to have a second display area (e.g., an area including the first portion 230a and the second portion 230b), which corresponds to a third length L3 greater than the first length L1 and is larger than the first display area.

According to an embodiment, the electronic device 200 may include at least one of an input device (e.g., a microphone 203-1) disposed in the second space 2201 of the second housing 220, a sound output device (e.g., a phone call receiver 206 and/or a speaker 207), sensor modules 204 and 217, a camera module (e.g., the first camera module 205 or the second camera module 216), a connector port 208, a key input device 219, or an indicator (not illustrated). In an embodiment, the electronic device 200 may include another input device (e.g., the microphone 203) disposed in the first housing 210. In some embodiments, the electronic device 200 may be configured such that at least one of the above-mentioned components is omitted or other components are additionally included. In some embodiments, at least one of the above-described components may be disposed in the first space 2101 in the first housing 210.

According to an embodiment, the input device may include a microphone 203-1. In some embodiments, the input device (e.g., the microphone 203-1) may include multiple microphones arranged to detect the direction of sound. The sound output device may include, for example, a call receiver 206 and a speaker 207. In an embodiment, regardless of the slide-in/slid-out state, the speaker 207 may face the outside through at least one speaker hole provided in the second housing 220 at a position always exposed to the outside (e.g., the fifth side surface 2212). In an embodiment, in the slide-out state, the connector port 208 may face the outside through a connector port hole provided in the second housing 220. In some embodiments, in the slide-in state, the connector port 208 may face the outside through an opening provided in the first housing 210 to correspond to the connector port hole. In some embodiments, the call receiver 206 may include a speaker that operates without a separate speaker hole (e.g., a piezo speaker).

According to an embodiment, the sensor modules 204 and 217 may generate electrical signals or data valuescorresponding to an internal operating state or an external environmental state of the electronic device 200. In an embodiment, the sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. In an embodiment, the first sensor module 204 may be disposed under the flexible display 230 in the front surface of the electronic device 200. In an embodiment, the first sensor module 204 and/or the second sensor module 217 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to an embodiment, the camera module may include a first camera module 205 disposed on the front surface of the electronic device 200 and a second camera module 216 disposed on the rear surface of the electronic device 200. In an embodiment, the electronic device 200 may include a flash (not illustrated) located near the second camera module 216. In an embodiment, the camera modules 205 and 216 may include one or more lenses, an image sensor, and/or an image signal processor. In an embodiment, the first camera module 205 may be disposed under the flexible display 230 and may be configured to photograph a subject through a portion of an active area (e.g., a display area) of the flexible display 230.

According to an embodiment, the first camera module 205 among the camera modules and some sensor modules 204 among the sensor modules 204 and 217 may be disposed to detect the external environment through the flexible display 230. For example, the first camera module 205 or some sensor modules 204 may be disposed in the second space 2201 in the second housing 220 to be in contact with the external environment through a transmissive area or a perforated opening provided in the flexible display 230. In an embodiment, the area of the display 230 that faces the first camera module 205 may be configured as the transmissive area having a predetermined transmittance, as a portion of an active area that displays content. In an embodiment, the transmissive area may have a transmittance ranging from about 5% to about 20%. The transmissive area may include an area overlapping an effective area (e.g., a field of view area) of the first camera module 205 through which light imaged by an image sensor to generate an image passes. For example, the transmissive area of the flexible display 230 may include an area having a lower pixel density and/or a lower wire density than the surrounding area. For example, the transmissive area may be replaced with the above-mentioned opening. For example, some camera modules 205 may include an under-display camera (UDC). In some embodiments, some sensor modules 204 may be disposed to perform the functions thereof in the second space 2201 in the second housing 220 without being visually exposed through the flexible display 230.

According to an embodiment, the electronic device 200 may include at least one antenna element (e.g., the antenna element 224b in FIG. 4) electrically connected to a wireless communication circuit (e.g., the wireless communication module 192 in FIG. 1) disposed in an inner space (e.g., the second space 2201 in second housing 220). In an embodiment, the electronic device 200 may include a bezel antenna A disposed through at least a portion of the conductive first side surface member 211 of the first housing 210. For example, the bezel antenna A may include a conductive portion 227 (e.g., a conductive member) disposed through at least a portion of the second and third side surfaces 2112 and 2113 of the first side surface member 211 and electrically split by one or more split portions 2271 and 2272 made of a non-conductive material (e.g., polymer). In an embodiment, the wireless communication circuit (e.g., the wireless communication module 192 in FIG. 1) may be configured to transmit or receive a wireless signal in at least one predetermined frequency band (e.g., about 600 MHz to 9000 MHz) (e.g., a legacy band or NR band) via the conductive portion 227. In an embodiment, the electronic device 200 may include a side surface cover 2112a disposed on the second side surface 2112 to cover at least a portion of at least one split portion 2271. In some embodiments, the bezel antenna A may be disposed on at least one of the first side surface 2111, the second side surface 2112, or the third side surface 2113. In some embodiments, the bezel antenna A may be disposed on at least one of the fourth side surface 2211, the fifth side surface 2212, or the sixth side surface 2213 of the second housing 220. In some embodiments, the electronic device 200 may further include at least one antenna module (e.g., a mmWave antenna module or a mmWave antenna structure) disposed in the inner space (e.g., the first space 2101 or the second space 2201) and configured to transmit or receive a wireless signal of a frequency band ranging from about 3 GHz to 100 GHz via another wireless communication circuit (e.g., the wireless communication module 192 in FIG. 1).

According to an embodiment, the slide-in/slide-out operation of the electronic device 200 may be automatically performed. For example, the slide-in/slide-out operation of the electronic device 200 may be executed via gear-coupling between a drive motor (e.g., the drive motor 260 in FIG. 4) including a pinion gear (e.g., the pinion gear 261 in FIG. 4) disposed in the first space 2101 in the first housing 210 and a rack gear (e.g., the rack gear 2221 in FIG. 4) disposed in the second space 2201 in the second housing 220 and gear-coupled with the pinion gear 261. In some embodiments, the drive motor 260 including the pinion gear 261 may be disposed in the second space 2201 in the second housing 220, and the rack gear 2221 coupled with the pinion gear 261 may be disposed in the first space 2101 in the first housing 210. For example, when detecting a triggering signal of switching from the slide-in state to the slide-out state or from the slide-out state to the slide-in state, the processor (e.g., the processor 120 in FIG. 1) of the electronic device 200 may operate the drive motor (e.g., the drive motor 260 in FIG. 4) disposed inside the electronic device 200. In an embodiment, the triggering signal may include a signal generated in response to selection (e.g., touch) of an object displayed on the flexible display 230 or manipulation of a physical button (e.g., a key button) included in the electronic device 200. In some embodiments, the slide-in/slide-out operation of the electronic device 200 may be manually performed through a user's manipulation.

According to an embodiment, the electronic device 200 has a structure in which the second housing 220 is slid in and/or slid out with respect to the first housing 210 along the length direction of the electronic device 200 (e.g., a vertical direction) (e.g., the ±y-axis direction), but is not limited thereto. For example, the electronic device 200 may have a structure in which the second housing 220 is slid in or slid out with respect to the first housing 210 along the width direction of the electronic device 200 perpendicular to the length direction (e.g., a horizontal direction) (e.g., the ±x-axis direction). In some embodiments, the electronic device 200 may be configured such that the length of the second side surface 2112 of the first housing 210 is greater than the length of the first side surface 2111. In this case, correspondingly, the length of the fifth side surface 2212 of the second housing 220 may also be greater than the length of the fourth side surface 2211.

FIG. 4 is an exploded perspective view of an electronic device according to various embodiments of the disclosure.

In describing the electronic device 200 of FIG. 4, components that are substantially the same as those of the electronic device 200 of FIGS. 2A to 3B may be assigned with the same reference numerals, and a detailed description thereof may be omitted.

Referring to FIG. 4, the electronic device 200 may include a first housing 210 including a first space 2101, a second housing 220 that is coupled to be slidable from the first housing 210 and includes a second space 2201, a support member 240 that is fixed to at least a portion of the second housing 220 and is at least partially bendably accommodated into the first space 2101 according to a slide-in operation, a flexible display 230 that is disposed to be supported by at least a portion of the support member 240 and the second housing 220, and a drive module (e.g., a drive mechanism) that drives the second housing 220 from the first housing 210 in the slide-in direction (e.g., the -y-axis direction) and/or the slide-out direction (e.g., the y-axis direction). In an embodiment, the first housing 210 may include a first side surface member 211 and a first rear surface cover 213 coupled with at least a portion of the first side surface member 211 (e.g., at least a portion of the first extension member 212). In an embodiment, the second housing 220 may include a second side surface member 221 and a second rear surface cover 223 coupled with at least a portion of the second side surface member 221 (e.g., at least a portion of the second extension member 222). In an embodiment, the drive module may include a drive motor 260 disposed in the first space 2101 and including a pinion gear 261, and a rack gear 2221 disposed in the second space 2201 to be gear-coupled with the pinion gear 261. In an embodiment, the drive module may further include a reduction module (e.g., a reduction gear assembly) disposed to reduce rotational speed and increase driving force by being coupled with the drive motor 260. In an embodiment, the drive motor 260 may be disposed to be supported by a motor bracket 260a disposed on a support bracket 225 disposed in the first space 2101 in the first housing 210. In an embodiment, the drive motor 260 may be fixed to an end (e.g., an edge) of the support bracket 225 in the slide-out direction (e.g., the y-axis direction) in the first space 2101. In an embodiment, the rack gear 2221 may be fixedly disposed on the second extension member 222 of the second housing 220. In some embodiments, the rack gear 2221 may be integrated through injection molding onto at least a portion of the second extension member 222. In an embodiment, the rack gear 2221 may be arranged to have a length in a direction parallel to the sliding direction (e.g., the ±y-axis direction). Therefore, when the electronic device 200 is assembled, the pinion gear 261 may maintain the state of being gear-coupled with the rack gear 2221, and the pinion gear 261 receiving the driving force of the drive motor 260 is moved along the rack gear 2221. As a result, the second housing 220 can be moved with respect to the first housing 210. In an embodiment, the sliding distance of the second housing 220 may be determined by the length of the rack gear 2221.

According to an embodiment, the electronic device 200 may include multiple electronic components disposed in the second space 2201. In an embodiment, the multiple electronic components may include a second substrate 252 (e.g., a main substrate), a camera module 216 disposed around the second substrate 252, a speaker 207, a connector port 208, and a microphone 203-1. In an embodiment, since the multiple electronic components are disposed around the second substrate 252 in the second space 2201 in the first housing 210, efficient electrical connection may be possible. In some embodiments, at least one of the above-described multiple electronic components may be disposed in the first space 2101 in the first housing 210.

According to an embodiment, the electronic device 200 may include a rear bracket 224 disposed between the second extension member 222 and the second rear surface cover 223 in second housing 220. In an embodiment, the rear bracket 224 may be disposed to cover at least some of the multiple electronic components. In an embodiment, the rear bracket 224 may be structurally coupled to at least a portion of the second extension member 222. In some embodiments, the rear bracket 224 may be omitted. In an embodiment, the rear bracket 224 may be disposed to cover the multiple electronic components and to support the second rear surface cover 223. In an embodiment, the rear bracket 224 may include an opening 224a (e.g., a through hole) or a notch area 224c (e.g., a cut portion) provided in an area corresponding to a camera module 216 and/or a sensor module (e.g., the sensor module 217 in FIG. 3B). In an embodiment, the rear bracket 224 may include at least one antenna element 224b. In an embodiment, when the rear bracket 224 is a dielectric injection-molded product (e.g., an antenna carrier), the at least one antenna element 224b may be disposed on the outer surface of the rear bracket 224. In an embodiment, the at least one antenna element 224b may include a laser direct structuring (LDS) antenna pattern provided on the outer surface of the rear bracket 224. In some embodiments, the at least one antenna element 224b may include a conductive plate attached to the outer surface of the rear bracket 224 or a conductive paint or conductive pattern provided on the outer surface. In some embodiments, the at least one antenna element 224b may be disposed in a built-in manner when the rear bracket 224 is injection-molded. In an embodiment, the at least one antenna element 224b may be configured to transmit or receive a wireless signal in a predetermined frequency band (e.g., a legacy band) by being electrically connected to a wireless communication circuit (e.g., the wireless communication module 192 in FIG.1) disposed on the second substrate 252. In an embodiment, the camera module 216 and/or the sensor module 217 may be arranged to detect an external environment through the opening 224a or the notch area 224c. In an embodiment, the second rear surface cover 223 may be processed to be transparent at least in an area corresponding to the camera module 216 and/or the sensor module 217. In some embodiments, the second rear surface cover 223 may include a through hole provided at least the area corresponding to the camera module 216 and/or the sensor module 217. In this case, the through hole may be covered with a transparent window. In some embodiments, the camera module 216 and/or the sensor module 217 may be configured to operate only when the electronic device 200 is in the slide-out state.

According to an embodiment, the electronic device 200 may include a support bracket 225 disposed in the first space 2101 in the first housing 210. In an embodiment, the support bracket 225 may include a support portion 2252 disposed at one end thereof, wherein the support portion 2252 has a curved outer surface to support the rear surface of the support member 240 that is bent during a sliding operation for switching from the slide-out state to the slide-in state. In an embodiment, the support bracket 225 may include a support structure configured to support and fix the drive motor 260 via the motor bracket 260a. In an embodiment, the support bracket 225 may include a battery seat 2251 configured to accommodate a battery. In an embodiment, the drive motor 260 may be disposed at the end (e.g., an edge) of the support bracket 225 in the slide-out direction (e.g., the y-axis direction). For example, when the assembly of the electronic device 200 is completed, the drive motor 260 may be disposed at a position closest to the second substrate 252 among the electronic components disposed in the first housing 210, thereby helping to minimize the size and/or the length of the flexible circuit board F1 (e.g., a flexible printed circuit board (FPCB)) electrically interconnecting the second substrate 252 and the drive motor 260. In an embodiment, the electronic device 200 may include a pair of guide rails 226 disposed on opposite side surfaces of the support bracket 225 to guide the opposite ends of the support member 240 in the sliding direction.

According to an embodiment, the first housing 210 may include an opening 212a (e.g., a through hole) disposed in an area corresponding to the camera module 216 and/or the sensor module 217 disposed in the second housing 220 when the electronic device 200 is in the slide-in state in the first extension member 212. In an embodiment, when the electronic device 200 is in the slide-in state, the camera module 216 and/or the sensor module 217 may detect an external environment through the opening 212a provided in the first housing 210. In some embodiments, an area of the first rear surface cover 213 corresponding to the camera module 216 and/or the sensor module 217 may be processed to be transparent.

According to an embodiment, the electronic device 200 may include a first substrate 251 (e.g., a sub-substrate) and an antenna member 253 disposed between the first extension member 212 and the first rear surface cover 213 in the first housing 210. In an embodiment, the first substrate 251 and the antenna member 253 may be disposed on at least a portion of the first extension member 212. In an embodiment, the first substrate 251 and the antenna member 253 may be electrically connected to the second substrate 252 via at least one electrical connecting member (e.g., a flexible printed circuit board (FPCB) or a flexible RF cable (FRC)). In an embodiment, the antenna member 253 may include a multi-function coil or multi-function core (MFC) antenna configured to execute a wireless charging function, a neat field communication (NFC) function, and/or an electronic payment function. In some embodiments, the antenna member 253 may be electrically connected to the second substrate 252 via the first substrate 251 by being electrically connected to the first substrate 251. In some embodiments, the first substrate 251 and/or the antenna member 253 may be electrically connected to the second substrate 252 via at least a portion of the flexible circuit board F1 connecting the drive motor 260 and the second substrate 252 to each other.

According to an embodiment, the support member 240 may be guided by the guide rails 226 during the slide-in/slide-out operation. In an embodiment, the support member 240 may include multiple bars 241 rotatably coupled to each other and a guide projection 2411 protruding from each of opposite ends of each of the multiple bars 241. In an embodiment, the guide rails 226 may each include a guide slit 2261 provided at a position corresponding to a movement trajectory of the support member 240. In an embodiment, when the support member 240 fixed by being attached to the rear surface of the flexible display 230 is movably coupled to the guide rails 226, the guide projections 2411 may move along the guide slits 2611, thereby helping to reduce a phenomenon in which the flexible display 230 is separated or deformed during operation.

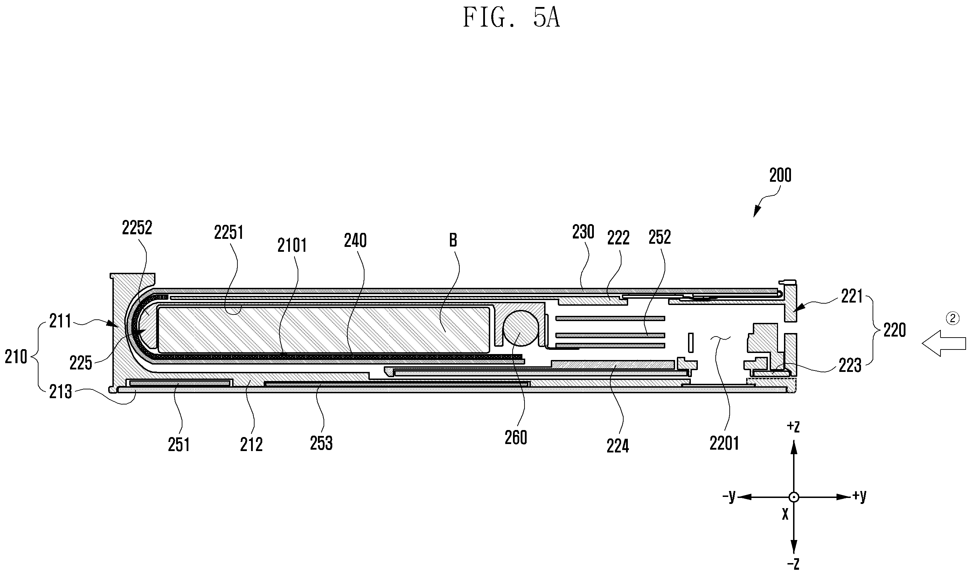

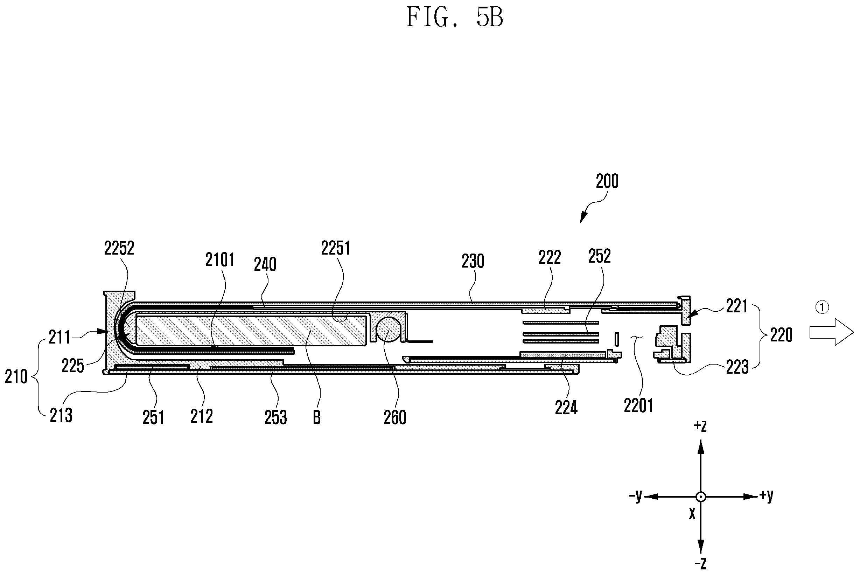

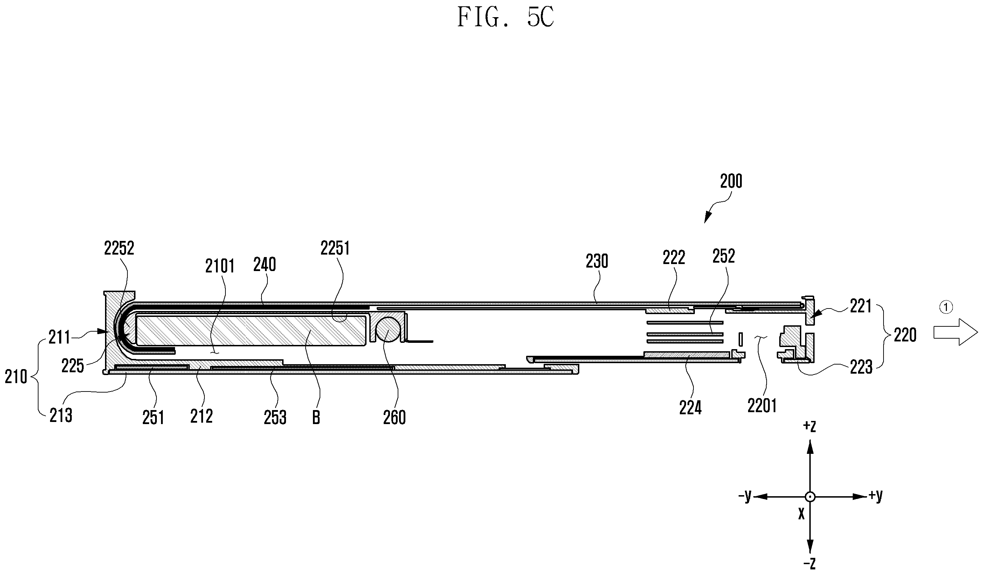

FIG. 5A is a cross-sectional view of the electronic device according to various embodiments of the disclosure taken along line 5a-5a in FIG. 2A. FIG. 5B is a cross-sectional view illustrating the electronic device according to various embodiments of the disclosure in an intermediate state. FIG. 5C is a cross-sectional view of the electronic device according to various embodiments of the disclosure taken along line 5c-5c in FIG. 3A.

In describing the electronic device 200 of FIGS. 5A to 5C, the components that are substantially the same as those of the electronic device 200 of FIG. 4 may be assigned with the same reference numerals, and a detailed description thereof may be omitted.

Referring to FIGS. 5A to 5C, the electronic device 200 may include a first housing 210 including a first space 2101, a second housing 220 including a second space 2201, a support member 240 connected to the second housing 220 and at least partially accommodated in the first space 2101 in the slide-in state, a flexible display 230 disposed to be supported by at least a portion of the support member 240 and at least a portion of the second housing 220, and a drive motor 260 including a pinion gear (e.g., the pinion gear 261 in FIG. 4) disposed in the first space 2101 and gear-coupled with a rack gear (e.g., the rack gear 2221 in FIG. 4) in the second space 2201. In an embodiment, via the gear-coupling between the pinion gear (e.g., the pinion gear 261 in FIG. 4) and the rack gear 2121 (e.g., the rack gear 2221 in FIG. 4), the drive motor 260 may automatically move the second housing 220 in the slide-in direction (direction ②) or the slide-out direction (direction ①) with respect to the second housing 220.

According to an embodiment, in the slide-in state of the electronic device 200 (the state in FIG. 5A), at least a portion of the second housing 220 may be accommodated in the first space 2101 in the first housing 210. In an embodiment, at least a portion of the flexible display 230 may be disposed to be invisible from the outside by being bent and accommodated into the first space 2101 together with the support member 240. In this case, a first display area of the flexible display 230 (e.g., the display area corresponding to the first portion 230a in FIG. 3A) may be exposed to the outside.

According to an embodiment, the electronic device 200 may be switched from an intermediate state (the state illustrated in FIG. 5B) to the slide-out state (the state illustrated in FIG. 5C) by controlling driving of the drive motor 260. In some embodiments, the electronic device 200 may be configured to stop in a predetermined intermediate state between the slide-in state and the slide-out state (a free stop function). In some embodiments, the electronic device 200 may be switched to the slide-in state, the intermediate state, or the slide-out state through a user's manipulation in a state in which no driving force is provided to the drive motor 260.

According to an embodiment, at least a portion of the second housing 220 may be switched to the slide-out state of being at least partially moved to the outside from the first housing 210 along a first direction (direction ①) through the driving of the drive motor 260. In an embodiment, the flexible display 230 may be disposed such that the portion slid in the first space 2101 may be exposed to be visible from the outside by being moved together with the support member 240 while being supported by the support bracket 225 in the slide-out state of the electronic device 200 (the state of FIG. 5C). In this case, in the flexible display 230, a second display area (e.g., a display area including the first portion 230a and the second portion 230b in FIG. 3A) that is larger than the first display area may be exposed to the outside.

According to an embodiment, the electronic device 200 may include a battery B disposed on a battery seat 2251 of a support bracket 225 fixed to the first space 2101 in the first housing 210. In an embodiment, since the battery B is disposed in the first housing 210, a separate drive gap for avoiding interference with surrounding structures according to movement may not be required. Accordingly, the battery B may be expanded in thickness to approach the battery seat 2251 of the support bracket 225 or to come into contact with the rear surface of the support member 240, so that the battery volume is relatively increased to support the moving support member 240, thereby helping to reduce sagging of the flexible display 230 and to improve operational reliability.

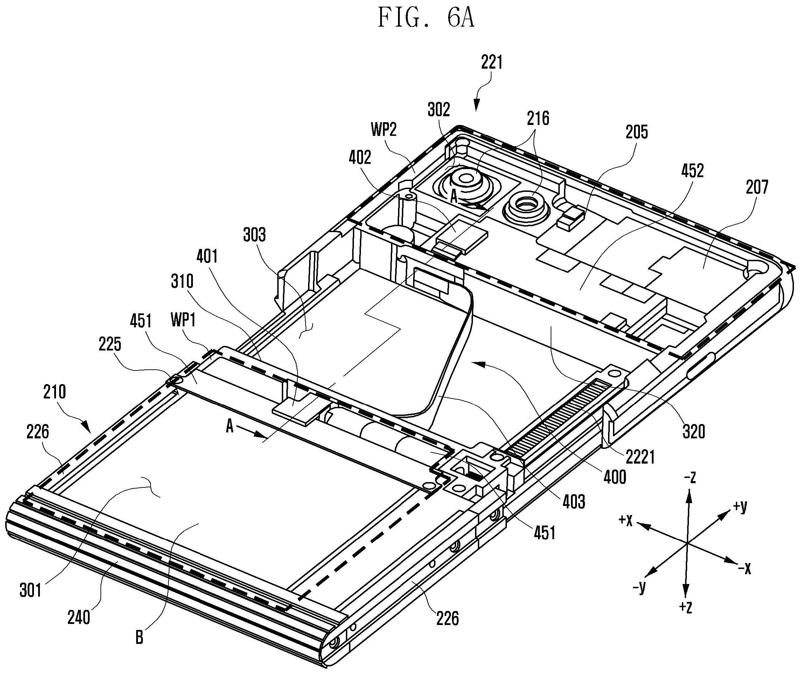

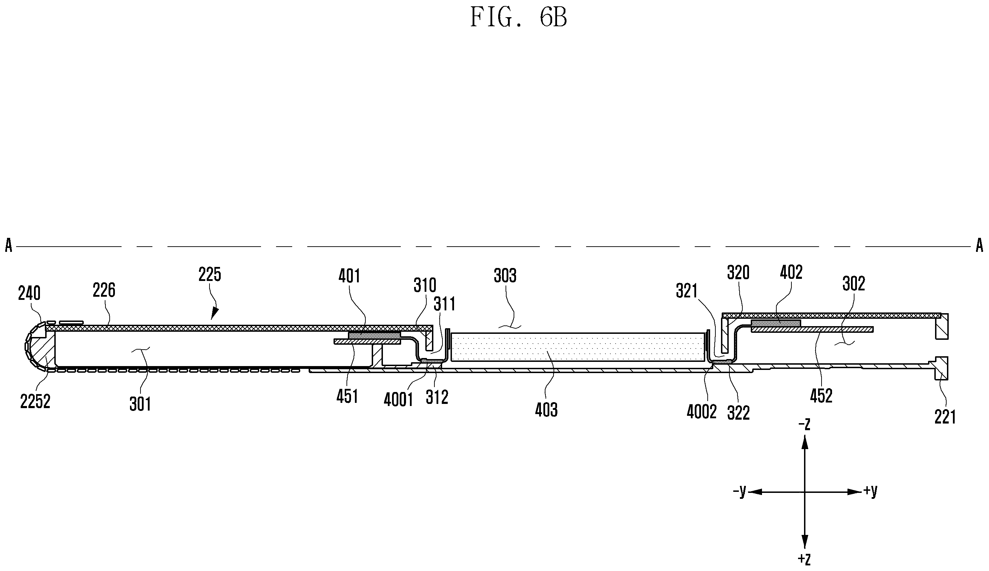

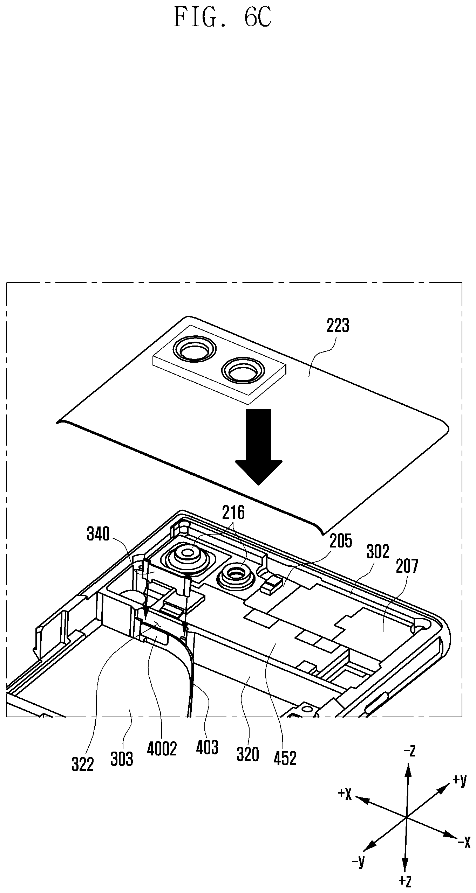

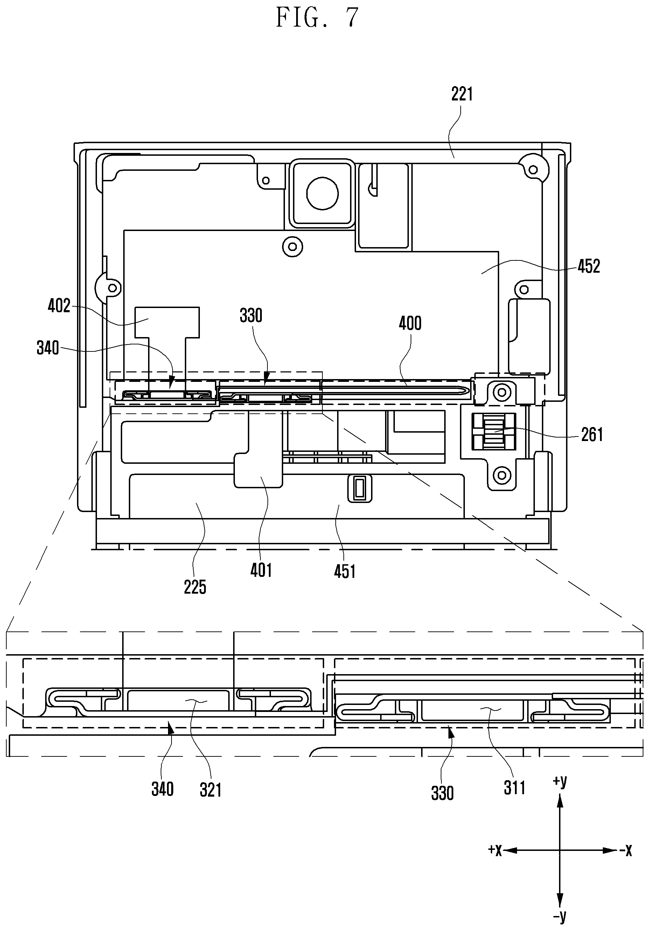

FIG. 6A is an exploded perspective view of a support bracket and a second side member according to an embodiment of the disclosure. FIG. 6B is a cross-sectional view of the electronic device according to an embodiment of the disclosure, taken along line A-A of FIG. 6A. FIG. 6C is a view illustrating a state in which the first bracket 330 and the second bracket 340 are not overlapping when the electronic device according to an embodiment of the disclosure is in the slid-in state. FIG. 7 is an exploded perspective view of a waterproof structure for an insertion hole, according to an embodiment of the disclosure.

Since an electronic device to be described below includes similar components to the above-described electronic device 200 (e.g., the electronic device 101 in FIG. 1), detailed descriptions of overlapping components will be omitted, and unless necessary, the same or similar components will be described using the same reference numerals.

According to an embodiment of the disclosure, as illustrated in FIGS. 4 to 5C, multiple substrates 451 and 452 may be disposed in the electronic device 200. The multiple substrates 451 and 452 may include a first substrate 451 (e.g., a sub-substrate) and a second substrate 452 (e.g., a main substrate) (e.g., the second substrate 252 in FIG. 4). In an embodiment, the first substrate 451 may be disposed in the first housing 210. The second substrate 452 may be disposed in the second housing 220. The first substrate 451 may be electrically connected to multiple electronic components disposed in the first housing 210. For example, the first substrate 451 may be electrically connected to an antenna member 253, a drive motor 260, and/or a battery B. Similarly, the second substrate 452 may be electrically connected to multiple electronic components disposed in the second housing 220. For example, the second substrate 452 may be electrically connected to a communication module 192 (e.g., the communication module 192 in FIG. 2), a camera module 216, a socket module 218 (e.g., a SIM tray), a speaker 207, and a connector port 208.

According to an embodiment, as illustrated in FIG. 4, FIG. 6A, and FIG. 6B, the electronic device 200 may include a connecting member 400 (e.g., the flexible printed circuit board F1 in FIG. 4) that electrically connects the first substrate 451 and the second substrate 452. The connecting member 400 may transmit electrical signals between electronic components connected to the first substrate 451 and the second substrate 452, respectively. In an embodiment, the connecting member 310 may electrically connect the antenna member 253 (e.g., the antenna module 197 in FIG. 1) connected to the first substrate 451 and the communication module 192 connected to the second substrate 452. In an embodiment, the connecting member 400 may be a component that transmits a radio frequency (RF) signal. The connecting member 400 may transmit an RF signal processed by the communication module 192 of the electronic device 200 to the antenna member 253, or may transmit an RF signal received from the antenna member 253 to the communication module 192.

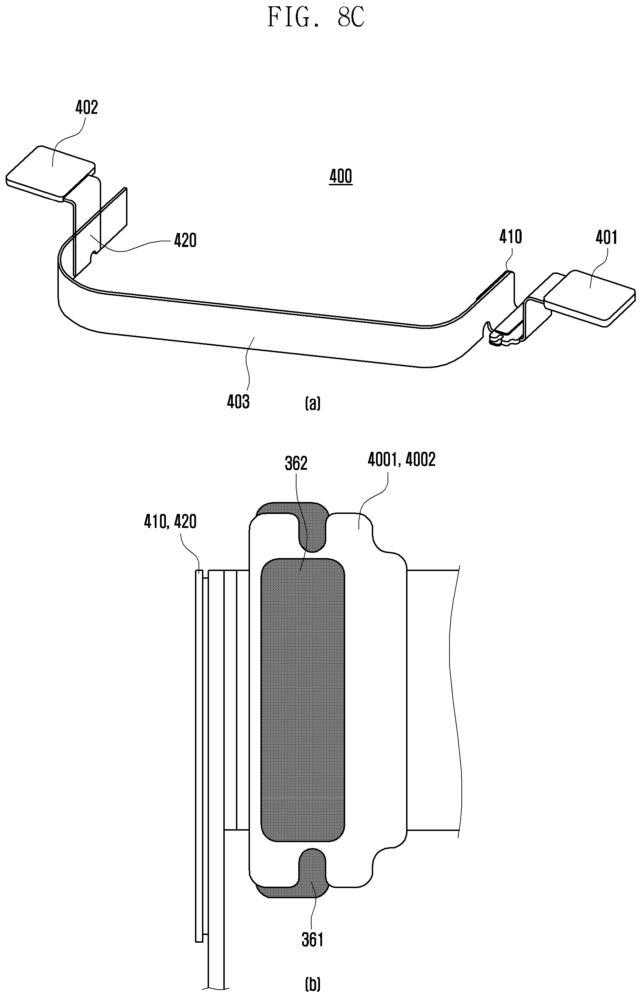

In an embodiment, referring to FIG. 8C to be described below, the connecting member 400 may include a first connector 401 located in a first portion 4001, a second connector 402 located in a second portion 4002 opposite to the first portion 4001, and a bendable bending portion 403 connecting the first connector 401 and the second connector 402. The pin of the first connector 401 may be connected to a connector portion (not illustrated) provided in the first substrate 451. The pin of the second connector 402 may be connected to a connector portion (not illustrated) provided in the second substrate 452. Therefore, electronic components disposed on the first substrate 451 and the second substrate 452 may be electrically connected via the connecting member 400. In an embodiment, the connector pins 401 and 402 of the connecting member 400 may be integrated with the connecting member 400, or may be formed separately and connected to the connecting member 400.

According to an embodiment, the connecting member 400 may be configured to have a length or shape capable of accommodating the sliding distance in the electronic device 200. In an embodiment, the connecting member 400 may be made of an elastic material that expands when the electronic device 200 is extended (slide-out state) and returns to its original position when the electronic device 200 is retracted (slid-in state).

According to an embodiment, the connecting member 400 may include a flexible printed circuit board radio frequency cable (FRC) or a flexible printed circuit board (FPCB). The connecting member 400 may be made of a flexible material and may include multiple conductive lines. For example, the connecting member 400 may include a power line, a signal line, and/or a ground line. For example, at least some of the conductive lines included in the connecting member 400 may be electrically connected to electronic components disposed in the first housing 210 and/or electronic components disposed in the second housing 220.

According to an embodiment, as illustrated in FIG. 6A, the electronic device 200 may include a first area 301 (e.g., the seating portion 2251 in FIG. 4) in which electronic components are disposed, a second area 302 (e.g., the second space 2201 in FIG. 4) in which the first housing 210 and the second housing 220 overlap each other by sliding, and a variable area 303 (e.g., the second space 2201 in FIG. 4) in which the first housing 210 and the second housing 220 overlap each other by sliding. The first area 301 may be an area in which electronic components are disposed in the first housing 210. In an embodiment, the first area 301 may be an area provided in the support bracket 225 included in the first housing 210. The second area 302 may be an area in which electronic components are disposed in the second housing 220. In an embodiment, the second area 302 may be an area provided in the second side surface member 221 included in the second housing 220. The variable area 303 may be a space between the first area 301 and the second area 302, and may be an area of which the volume changes depending on the sliding of the electronic device 200 (e.g., the electronic device 101 in FIG. 1).

According to an embodiment, as illustrated in FIGS. 6A and 6B, the first housing 210 may include a first partition wall 310. The first partition wall 310 may partition the first area 301 where the electronic components of the first housing 210 are disposed and the variable area 303. In some embodiments, the first area 301 may include a first waterproof structure WP1 that surrounds the electronic components. In this case, the first partition wall 310 may partition a waterproof area (e.g., the first area 301) where the first waterproof structure WP1 is disposed and a non-waterproof area (e.g., the variable area 303) where the first waterproof structure WP1 is not disposed. In an embodiment, the first partition wall 310 may be included in the support bracket 225 of the first housing 210. Hereinafter, for convenience of explanation, the first partition wall 310 may be described assuming that it is provided on the support bracket 225. However, this may not limit the location of the first partition wall 310 to the support bracket 225. The first partition wall 310 may be included in one of the elements constituting the first housing 210. Similarly, the second housing 220 may include the second partition wall part 320. The second partition wall 320 may partition the second area 302 where the electronic components of the second housing 220 are disposed and the variable area 303. In some embodiments, the second area 302 may include a second waterproof structure WP2 that surrounds the electronic components. In this case, the second partition wall 320 may partition a waterproof area (e.g., the second area 302) where the second waterproof structure WP2 is disposed and a non-waterproof area (e.g., the variable area 303) where the second waterproof structure WP2 is not disposed. In an embodiment, the second partition wall 320 may be included in the second side surface member 221 of the second housing 220. Hereinafter, for convenience of explanation, the second partition wall 320 may be described assuming that it is provided on the second side surface member 221. However, this may not limit the location of the second partition wall 320 to the second side surface member 221. The second partition wall 320 may be included in one of the elements constituting the second housing 220.

According to an embodiment, as illustrated in FIGS. 6A and 6B, the connecting member 400 may pass through the multiple partition walls 310 and 320 to be connected to the first substrate 451 and the second substrate 452. The connecting member 400 may be variable based on the sliding of the first housing 210 and the second housing 220. The first partition wall 310 may have a first insertion hole 311 through which the first connector 401 located in the first portion 4001 of the connecting member 400 passes. The second partition wall 320 may have a second insertion hole 321 through which the second connector 402 located in the second portion 4002 of the connecting member 400 passes. The connecting member 400 may be electrically connected to the first substrate 451 disposed in the first housing 210 as the first connector 401 passes through the first insertion hole 311. In addition, the connecting member 400 may be electrically connected to the second substrate 452 disposed in the second housing 220 as the second connector 402 passes through the second insertion hole 321. Accordingly, the first substrate 451 and the second substrate 452 may be electrically connected via the connecting member 400 to allow the electronic components to mutually transmit or receive electrical signals. According to an embodiment of the disclosure, the first housing 210 and the second housing 220 may perform relative movement by sliding. The first substrate 451 and the second substrate 452 connected to multiple electronic components may be separated and disposed in the first housing 210 and the second housing 220 that perform relative movement. The first housing 210 may be divided into a waterproof area (e.g., the first area 301) where the first substrate 451 is seated and a non-waterproof area (e.g., the variable area 303) where the first waterproof structure WP1 is not disposed, based on the first partition wall 310. The second housing 220 may be divided into a waterproof area (e.g., the second area 302) where the second substrate 452 is seated and a non-waterproof area (e.g., the variable area 303) where the second waterproof structure WP2 is not disposed, based on the second partition wall 320. The connecting member 400 may pass through the first partition wall 310 and the second partition wall 320 to connect the first substrate 451 and the second substrate 452. For example, the first partition wall 310 of the housing 210 may have a first insertion hole 311 formed therein to allow a portion of the connecting member 400 (e.g., the first portion 4001) to pass therethrough. The first partition wall 320 of the housing 220 may have a second insertion hole 321 formed therein to allow another portion of the connecting member 400 (e.g., the second portion 4002) to pass therethrough. However, external foreign substances or liquids may enter the first waterproof structure WP1 and the second waterproof structure WP2 through the first insertion hole 311 and the second insertion hole 321, causing malfunction and/or damage to the first substrate 451 and the second substrate 452. As described below, according to an embodiment of the disclosure, the first insertion hole 311 and the second insertion hole 321 may be sealed by the first waterproof member 351 and the second waterproof member 352, respectively.

According to an embodiment, the first insertion hole 311 and the second insertion hole 321 may be provided to correspond to the sliding direction of the electronic device 200. For example, the first insertion hole 311 may be provided in a direction ① or ② (e.g., the ± y-axis direction) of FIG. 2A with respect to the first partition wall 310. Similarly, the second insertion hole 321 may be provided in a direction ① or ② (e.g., the ± y-axis direction) of FIG. 2A with respect to the second partition wall 320. Accordingly, when the insertion holes 311 and 321 through which the connecting member 400 passes are provided in a direction corresponding to the sliding direction of the electronic device 200, the spaces where electronic components are disposed inside the electronic device 200 may be enlarged. For example, compared to the case where the insertion holes 311 and 321 are provided in the first direction perpendicular to the flexible display 230 (e.g., the z-axis direction based on FIG. 4), the spaces where electronic components are disposed inside the electronic device 200 may be enlarged.

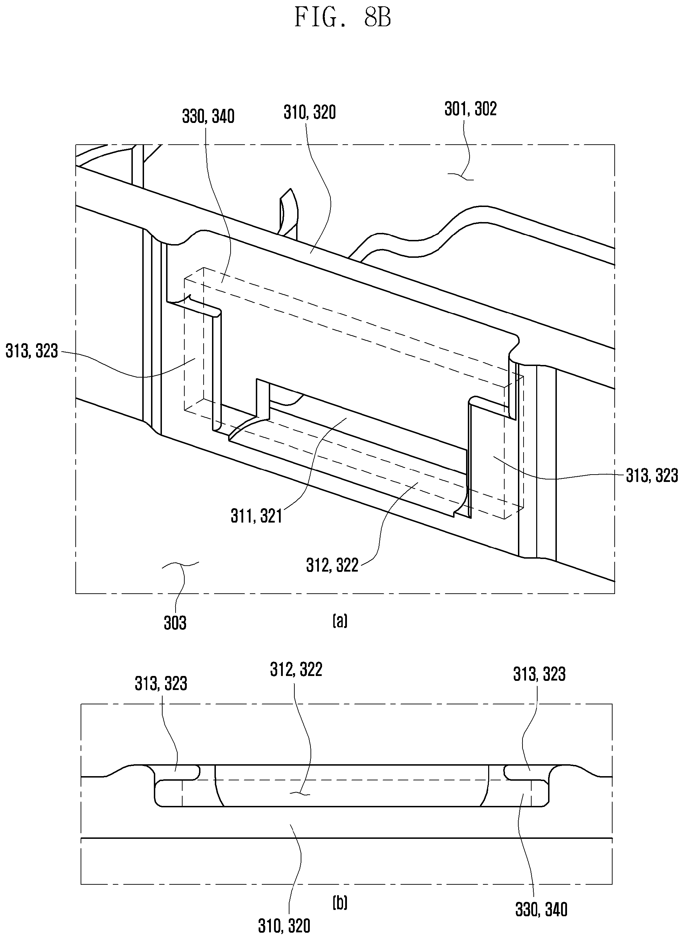

According to an embodiment, as illustrated in FIGS. 6A and 6C, the first bracket 330 may be disposed in the first insertion hole 311. Referring to FIG. 8B to described below, the first seating portion 312 on which the first bracket 330 is seated may be provided in the first partition wall 310. The first bracket 330 may be disposed on the first seating portion 312 to face the first insertion hole 311. A first waterproof member 351 may be disposed in the space between the first bracket 330 and the first partition wall 310. When foreign substances and/or liquids introduced from the outside of the electronic device 200 enter the first substrate 451 and electronic components disposed in the first area 301 through the first insertion hole 311, it may cause a malfunction of the electronic device 200. Accordingly, the first waterproof member 351 may block foreign substances and/or liquids introduced from the outside of the electronic device 200 from passing through the first insertion hole 311. Similarly, the second bracket 340 may be disposed in the second insertion hole 321. The second seating portion 322 on which the second bracket 340 is mounted may be provided in the second partition wall 320. The second bracket 340 may be disposed on the second seating portion 322 to face the second insertion hole 321. A second waterproof member 352 may be disposed in the space between the second bracket 340 and the second partition wall 320. The second waterproof member 352 may block foreign substances and/or liquids introduced from the outside of the electronic device 200 from passing through the second insertion hole 321. A detailed description of the waterproof structure of the insertion holes 311 and 321 by the brackets 330 and 340, the seating portions 312 and 322, and the waterproof members 351 and 352 will be described later.

According to an embodiment, the waterproof members 351 and 352 may be made of various materials. In an embodiment, the waterproof members 351 and 352 may include cured in place gaskets (CIPGs) (e.g., waterproof filling members) that have a property of being solidified by natural or external conditions (e.g., heat, ultraviolet rays, moisture, or pressure) including semi-solid or liquid substances. In addition, the waterproof members 351 and 352 may be provided in a solid state and disposed between the partition walls 310 and 320 and the brackets 330 and 340. Hereinafter, for convenience of explanation, the waterproof members 351 and 352 will be described assuming that they are provided in a liquid state.

According to an embodiment, the first bracket 330 may be disposed on the first seating portion 312 provided in the first partition wall 310. In an embodiment, the first seating portion 312 may be provided on a surface (e.g., one surface) of the first partition wall 310 facing the variable area 303. In this case, the first bracket 330 may be disposed on the first seating portion 312 to face the variable area 303. In some embodiments, the first seating portion 312 may be provided on a surface (e.g., the other surface) of the first partition wall 310 facing the first area 301. In this case, the first bracket 330 may be disposed on the first seating portion 312 to face the first area 301. However, the waterproof structure of the first insertion hole 311 provided via the first bracket 330 may obtain the same waterproof effect regardless of whether it is provided on one surface or the other surface of the first partition wall 310. Similarly, the second bracket 340 may be disposed on the second seating portion 322 provided in the second partition wall 320. In an embodiment, the second seating portion 322 may be provided on a surface (e.g., one surface) of the second partition wall 320 facing the variable area 303. In this case, the second bracket 340 may be disposed on the second seating portion 322 to face the variable area 303. In some embodiments, the second seating portion 322 may be provided on a surface (e.g., the other surface) of the second partition wall 320 facing the second area 302. In this case, the second bracket 340 may be disposed on the second seating portion 322 to face the second area 302. However, the waterproof structure of the second insertion hole 321 provided via the second bracket 340 may obtain the same waterproof effect regardless of whether it is provided on one surface or the other surface of the second partition wall 320. Hereinafter, for convenience of explanation, the first bracket 330 and the second bracket 340 will be described assuming that they are respectively disposed on the first partition wall 310 and the second partition wall 320 to face the variable area 303.

According to an embodiment, as illustrated in FIG. 6C, the waterproof structure of the insertion holes 311 and 321 may be assembled in the following order. In an embodiment, the connecting member 400 may be connected to the first substrate 451, as the first connector 401 passes through the first insertion hole 311 of the first partition wall 310. The first portion 4001 of the connecting member 400, which is connected to the first connector 401, may be positioned in the first insertion hole 311. Thereafter, the first bracket 330 may be inserted into the first seating portion 312 provided in the first partition wall 310. The first bracket 330 may be fixed to the first seating portion 312 via a pair of first fixing portions 313 provided in the first partition wall 310. Thereafter, the first waterproof member 351 may be disposed in the space between the first bracket 330 and the first partition wall 310 to seal the first insertion hole 311. Similarly, the sealing for the second insertion hole 321 may be performed in the same manner. For example, the connecting member 400 may be connected to the second substrate 452, as the second connector 402 passes through the second insertion hole 321 of the second partition wall 320. The second portion 4002 of the connecting member 400, which is connected to the second connector 402, may be positioned in the second insertion hole 321. Thereafter, the second bracket 340 may be inserted into the second seating portion 322 provided in the second partition wall 320. The second bracket 340 may be fixed to the second seating portion 322 via a pair of second seating portions 323 provided in the second partition wall 320. Thereafter, the second waterproof member 352 may be disposed in the space between the second bracket 340 and the second partition wall 320 to seal the second insertion hole 321. Therefore, the first insertion hole 311 and the second insertion hole 321, which are configured to allow the first substrate 451 and the second substrate 452 to be connected via the connecting member 400, may be sealed. Therefore, external foreign substances and/or liquids may not be introduced into the first area 301 and the second area 302, which are waterproof areas.

According to an embodiment, as illustrated in FIG. 7, the first insertion hole 311 and the second insertion hole 321 may be provided in the first partition wall portion (310) and the second partition wall portion (320), respectively, not to overlap each other when viewed in the y-axis direction of FIG. 7. For example, the first insertion hole 311 and the second insertion hole 321 may be provided in the first partition wall 310 and the second partition wall 320, respectively, so that they do not come into contact with or overlap each other when the electronic device 200 is in the slide-in state. In addition, the first bracket 330 disposed on the first partition wall 310 and the second bracket 340 disposed on the second partition wall 320 may be disposed in the first partition wall 310 and the second partition wall 320, respectively, so that they do not come into contact with (or overlap) each other when the electronic device 200 is in the slide-in state. In this case, the size of the variable area 303 may be minimized compared to that in the case where the first bracket 330 and the second bracket 340 come into contact with each other when the electronic device 200 is in the slid-in state. Therefore, the electronic device 200 may have a compact size. As the unnecessary size of the variable area 303 is reduced when the electronic device 200 is in the slide-in state, a space where electronic components are disposed may be additionally ensured.

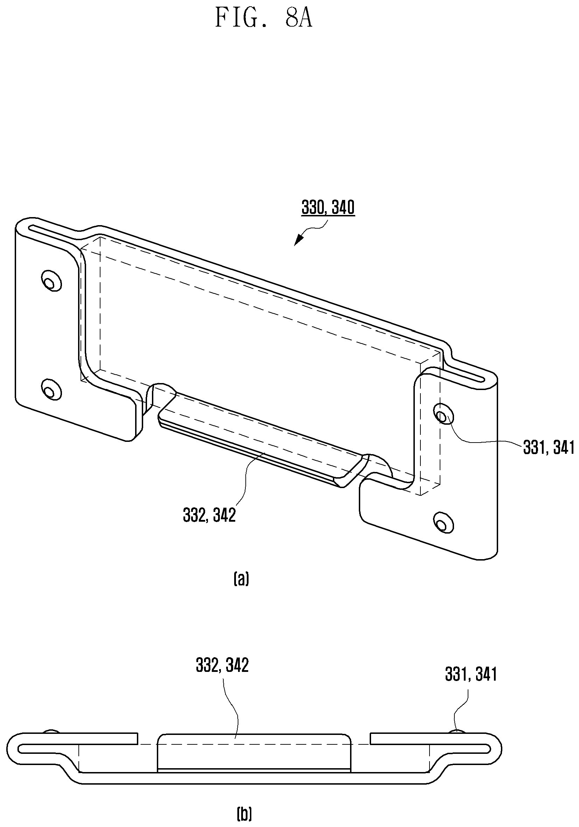

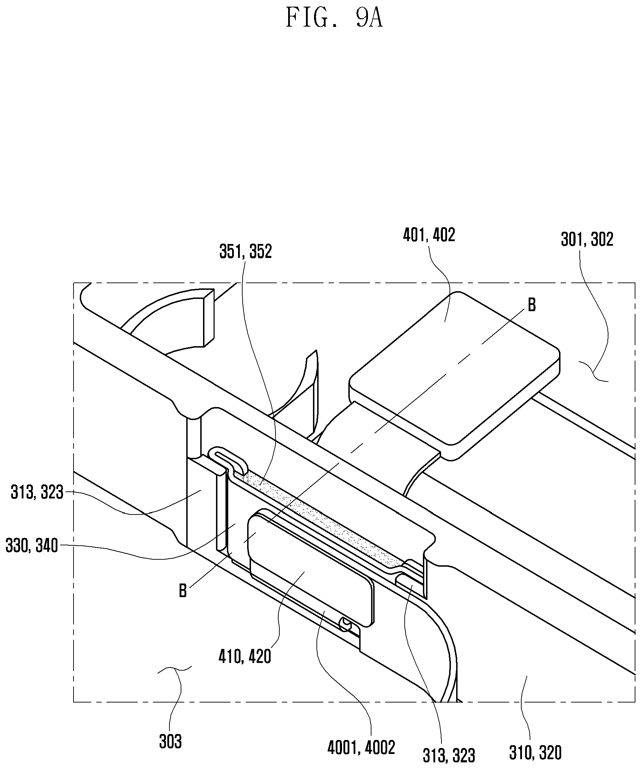

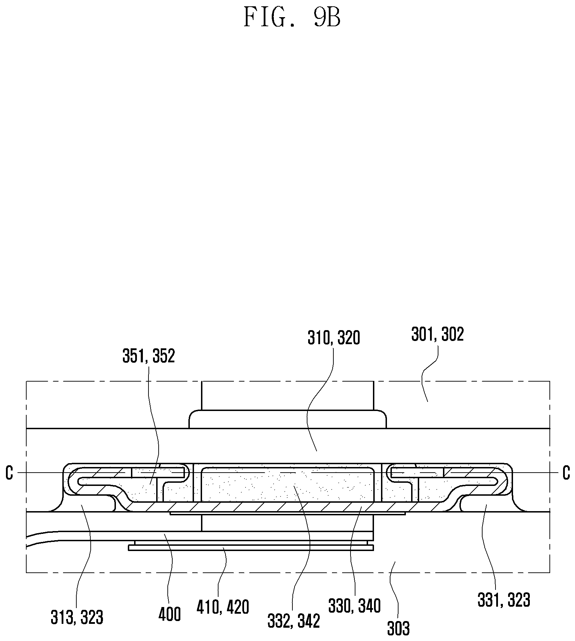

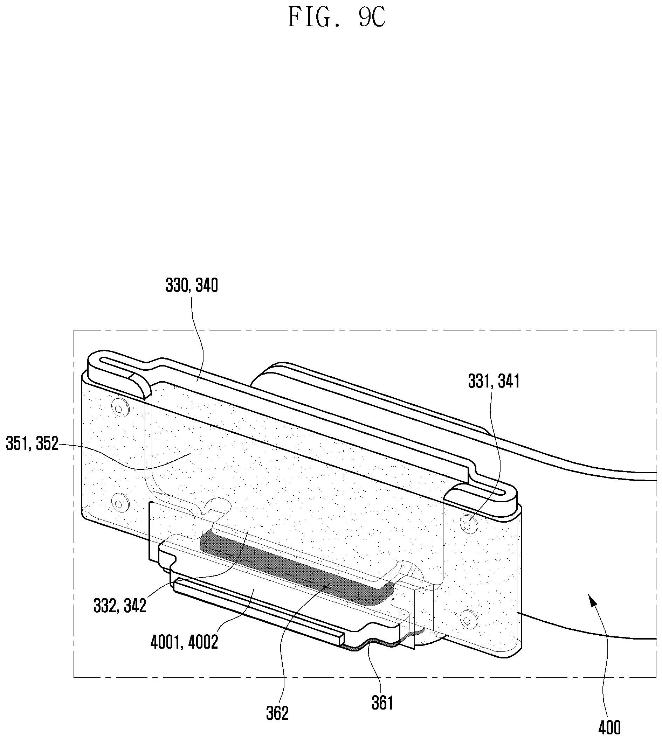

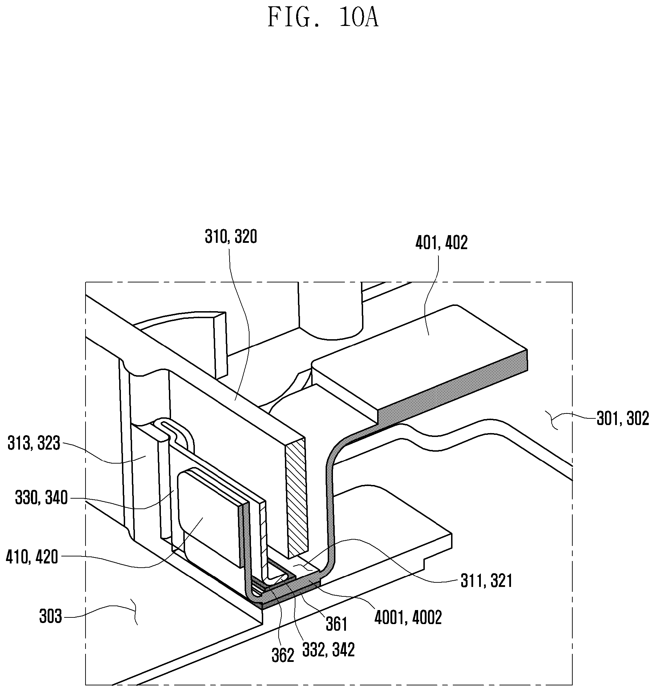

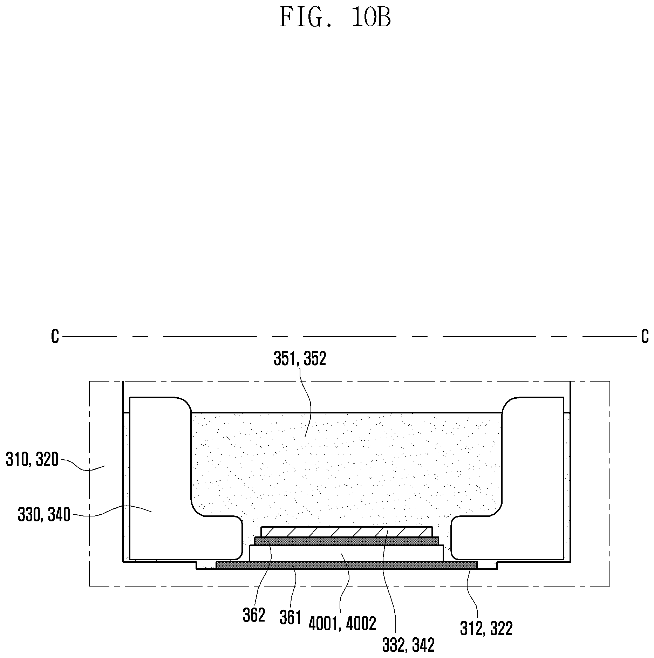

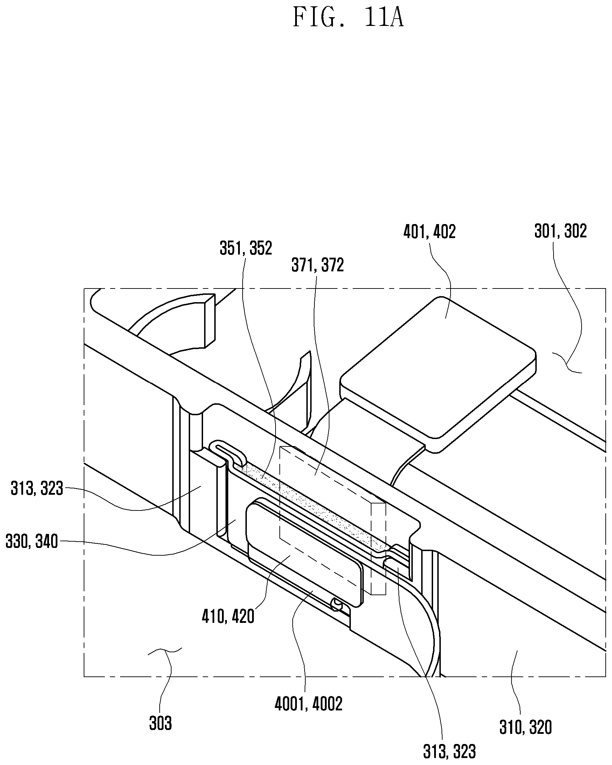

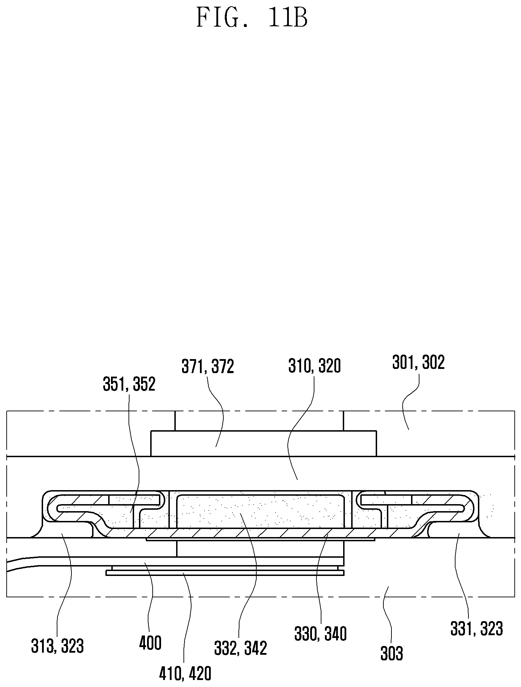

FIG. 8A illustrates a perspective view and plan view of the bracket according to an embodiment of the disclosure. FIG. 8B illustrates a perspective view and plan view of a seating portion provided on a partition wall according to an embodiment of the disclosure. FIG. 8C is a view showing a connecting member according to an embodiment of the disclosure. FIG. 9A is a view illustrating a state in which a bracket and a waterproof member are disposed in the seating portion provided on a partition wall. FIG. 9B is a plan view of FIG. 9A. FIG. 9C is a rear perspective view of the bracket illustrated in FIG. 9A. FIG. 10A is a view of an electronic device cut along line B-B in FIG. 9A. FIG. 10B is a cross-sectional view of FIG. 10A cut along line C-C. FIG. 11A is a view illustrating a state in which a shielding member is disposed on the partition wall of FIG. 9A. FIG. 11B is a plan view of FIG. 11A, illustrating a state in which the shielding member is disposed on the partition wall.

Hereinafter, the waterproof structure of the first insertion hole 311 and the second insertion hole 321 will be described. The waterproof structure of the first insertion hole 311 and the second insertion hole 321 may include a first bracket 330, a second bracket 340, a first partition wall 310, a second partition wall 320, a first seating portion 312, a second seating portion 322, a first waterproof member 351, a second waterproof member 352, a first adhesive member 361, and a second adhesive member 362. The waterproof structure of the first insertion hole 311 and the waterproof structure of the second insertion hole 321 may have substantially the same configuration. In the following description, the above configuration will be explained using a bracket 330 or 340, a partition wall 310 or 320, a seating portion 312 or 322, and a waterproof member 351 or 352. This is to exclude repeated explanations of substantially identical configurations, and the explanation of a "bracket" may be a description of the first bracket 330 disposed in the first housing 210 and the second bracket 340 disposed in the second housing 220. In addition, the first support portion 332 of the first bracket 330 and the second support portion 342 of the second bracket 340 may be described as a "support portion", and the first protrusion 331 and the second protrusion 341 may be described as a "protrusion". In addition, the description of a "partition wall" may be a description of the first partition wall 310 and the second partition wall 320, and the description of a "seating portion" may be a description of the first seating portion 312 and the second seating portion 322. Similarly, the description of the waterproof members 351 and 352 may be a description of the first waterproof member 351 disposed between the first bracket 330 and the first partition wall 310, and the second waterproof member 352 disposed between the second bracket 340 and the second partition wall 320.

According to an embodiment, as illustrated in FIG. 8A, the bracket 330 or 340 may include a support portion 332 or 342 that presses one of the first portions 4001 and the second portion 4002 of the connecting member 400 and a protrusion 331 or 341 that comes into contact with the partition wall 310 or 320. The support portion 332 or 342 may be a portion that extends in one direction (e.g., a direction parallel to the sliding direction in the electronic device 200 (e.g., the electronic device 101 in FIG. 1) from one surface of the bracket 330 or 340. The bracket 330 or 340 may press one of the first portion 4001 and the second portion 4002 of the connecting member 400 disposed in the seating portion 312 or 322 via the support portion 332 or 342 in the first direction (e.g., the z-axis direction based on FIG. 4). As the connecting member 400 is pressed in the first direction via the supporting portion 332 or 342, the lifting of the seating portion 312 or 322 may be prevented or reduced.

According to an embodiment, as illustrated in FIG. 8B, the partition wall 310 or 320 may include a seating portion 312 or 322 on which a bracket 330 or 340 is seated. The seating portion 312 or 322 may be connected to the insertion hole 311 or 321. In an embodiment, the seating portion 312 or 322 may be provided based on the size of the bracket 330 or 340. For example, the seating portion 312 or 322 may be configured to have substantially the same size as the width and/or depth of the bracket 330 or 340 such that the bracket 330 or 340 is not separated from the seating portion 312 or 322, or may be configured to be larger than the width and/or depth of the bracket 330 or 340 to allow the bracket 330 or 340 to be inserted thereinto. The partition wall 310 or 320 may include a pair of seating portions 313 and 323 that fix the bracket 330 or 340 inserted into the seating portion 312 or 322. The bracket 330 or 340 may be inserted into the seating portion 312 or 322 and may be fixed to the seating portion 312 or 322 through the pair of fixing portions 313 or 323.

In an embodiment, the bracket 330 or 340 may be coupled to the seating portion 312 or 322 in various ways. In an embodiment, the bracket 330 or 340 may be fitted to the seating portion 312 or 322. For example, the bracket 330 or 340 may include a protrusion 331 or 341. The protrusion 331 or 341 may be a portion that protrudes toward the partition wall 310 or 320 from one surface of the bracket 330 or 340 facing the partition wall 310 or 320. The protrusion 331 or 341 may come into contact with the partition wall 310 or 320 as the bracket 330 or 340 is disposed on the seating portion 312 or 322. The bracket 330 or 340 may be fixedly in close contact with the seating portion 312 or 322 via the protrusion 331 or 341. Therefore, the protrusion 331 or 341 may prevent or reduce the bracket 330 or 340 from moving or being removed from the seating portion 312 or 322. In addition, the bracket 330 or 340 may be fixed to the seating portion 312 or 322 in various ways. The bracket 330 or 340 may be fixed to the seating portion 312 or 322 in various ways, such as fixing by screws, fixing by an adhesive material disposed between the partition wall 310 or 320 and the bracket 330 or 340, hooking, soldering, or riveting.

According to an embodiment, as illustrated in FIG. 8C, the connecting member 400 may include a first connector 401 connected to the first substrate 451, a second connector 402 connected to the second substrate 452, and a bending portion 403 connecting the first connector 401 and the second connector 402. In an embodiment, the first connector 401 may be located in the first portion 4001 of the connecting member 400. The second connector 402 may be located in the second portion 4002. In an embodiment, the first portion 4001 of the connecting member 400 may be at least partially located on the first seating portion 312. Similarly, the second portion 4002 of the connecting member may be at least partially located on the second seating portion 322. In this case, the first portion 4001 and the second portion 4002 of the connecting member 400 may be respectively pressed in the first direction via the support portions 332 and 342 of the brackets 330 and 340. Therefore, the connecting member 400 may be fixed to the seating portions 312 and 322.

In an embodiment, referring to FIG. 8C and FIG. 10A to be described below, the connecting member 400 may be fixed to each of the first seating portion 312 and the second seating portion 322 via the first adhesive member 361. The first adhesive member 361 may be disposed on the seating portion 312 or 322 to be at least partially located in the insertion hole 311 or 321. The first portion 4001 and the second portion 4002 of the connecting member 400 may be bonded to the first adhesive member 361 and fixed to the first seating portion 312 and the second seating portion 322, respectively.

In an embodiment, referring to FIG. 8C and FIG. 10A to be described below, the second adhesive member 362 may be positioned between the connecting member 400 and the support portions 332 and 342 of the brackets 330 and 340. For example, the second adhesive member 362 may be disposed between the first portion 4001 of the connecting member 400 and the first support portion 332 of the first bracket 330 to bond the connecting member 400 and the first support portion 332. In addition, the second adhesive member 362 may be disposed between the second portion 4002 of the connecting member 400 and the second support portion 342 of the second bracket 340 to bond the connecting member 400 and the second support portion 342.

In an embodiment, referring to FIG. 8C, the connecting member 400 may include a first reinforcement plate 410 disposed to face the first bracket 330 and a second reinforcement plate 420 disposed to face the second bracket 340. The first reinforcement plate 410 and the second reinforcement plate 420 may provide fixing force to the connecting member 400 made of a flexible material. For example, an area of the connecting member 400 where the first reinforcement plate 410 is disposed may be fixed in a shape to face the first bracket 330 through the first reinforcement plate 410. Another area of the connecting member 400 where the second reinforcement plate 420 is disposed may be fixed in a shape to face the second bracket 340 through the second reinforcement plate 420. In an embodiment, the reinforcement plates 410 and 420 may be formed of a material having a certain strength. For example, the reinforcement plates 410 and 420 may be made of a metal material and/or a non-metal material. Here, the metal material may include an alloy of aluminum, stainless steel (STS, SUS), iron, magnesium, titanium, or the like, and the non-metal material may include a synthetic resin, ceramic, or engineering plastic.

According to an embodiment, as illustrated in FIGS. 9A and 9B, a waterproof member 351 or 352 may be disposed in a space formed between the bracket 330 or 340 and the partition wall 310 or 320. The waterproof member 351 or 352 may be disposed in the space between the bracket 330 or 340 and the partition wall 310 or 320 to seal the insertion hole 311 or 312 in the x, y, and z-axis directions based on FIG. 6A. Therefore, in the insertion holes 311 and 321, the inflow of liquid or foreign substances into the first area 301 where the first substrate 451 is disposed and the second area 302 where the second substrate 452 is disposed may be blocked by the waterproof members 351 and 352.

In an embodiment, referring to FIGS. 9B and 9C, the waterproof member 351 or 352 may be filled between one surface of the bracket 330 or 340 where the protrusion 331 or 341 is provided and the partition wall 310 or 320. For example, the waterproof member 351 or 352 may be filled in the space formed between the bracket 330 or 340 and the partition wall 310 or 320. Therefore, it may be possible to prevent or reduce foreign substances and/or liquids from flowing into the insertion hole 311 or 321 through the empty space between the bracket 330 or 340 and the partition wall 310 or 320.

In an embodiment, the insertion holes 311 and 321 can be sealed from external liquids and/or foreign substances through structures disposed in the areas corresponding to the insertion holes 311 and 321. In an embodiment, referring to FIG. 10A, in the area corresponding to the insertion hole 311 or 321, the first adhesive member 361, the connecting member 400 (e.g., the first portion 4001 or the second portion 4002), the second adhesive member 362, and the support member 332 or 342 of the bracket 330 or 340 may be sequentially positioned. The area corresponding to the insertion hole 311 or 321 may be an area where the insertion hole 311 or 321 is provided on the partition wall 310 or 320. In an embodiment, the waterproof member 351 or 352 may be filled between the bracket 330 or 340 and the partition wall 310 or 320. In this case, the insertion hole 311 or 321 may be sealed through the first adhesive member 361, the second adhesive member 362, the connecting member 400, the support member 332 or 342 of the bracket 330 or 340, and the waterproof member 351 or 352.

According to an embodiment, as illustrated in FIGS. 10A and 10B, the waterproof structure of the insertion hole 311 or 321 may be a structure in which the support member 332 or 342 of the bracket 330 or 340, the second adhesive member 362, the connecting member 400, and the first adhesive member 361 are stacked in that order when the flexible display 230 is viewed in the first direction. The first adhesive member 361 and the second adhesive member 362 may be positioned at least partially in the insertion holes 311 and 321 to prevent or reduce foreign substances or liquids introduced from the outside of the electronic device 200 from entering the insertion holes 311 and 321. In addition, the waterproof member 351 or 352 may be filled in the space between the bracket 330 or 340 and the partition wall 310 or 320 to seal the insertion hole 311 or 321. Specifically, the above-described structure may be as follows. For example, the bracket 330 or 340 may be installed in the z-axis direction with respect to the seating portion 312 or 322 based on FIG. 6A. At least a portion of the first adhesive member 361, the second adhesive member 362, and the connecting member 400 (e.g., the first portion 4001 and the second portion 4002) may be positioned on the insertion holes 311 and 321. The waterproof member 351 or 352 may be filled in the space between the bracket 330 or 340 and the seating portion 312 or 322 in the first direction (e.g., the z-axis direction based on FIG. 6A) to seal the insertion hole 311 or 321 in the x, y, and z-axis directions based on FIG. 6A. In summary, the insertion hole 311 or 321 may be sealed via the bracket 330 or 340, the waterproof member 351 or 352, the first adhesive member 361, the second adhesive member 362, and a portion of the connecting member 400 (e.g., the first portion 4001 or the second portion 4002). Therefore, the inflow of external liquids and/or foreign substances into the first area 301 where the first substrate 451 is located and the second area 302 where the second substrate 452 is located through the insertion holes 311 and 321 may be prevented or suppressed.

According to an embodiment of the disclosure, the first housing 210 and the second housing 220 may perform relative movement by sliding. Electronic components may be separately disposed in the first housing 210 and the second housing 220. For example, the first substrate 451 connected to multiple electronic components may be disposed in the first housing 210, and the second substrate 452 connected to multiple electronic components may be disposed in the second housing 220. The first substrate 451 may be located inside the first waterproof structure WP1 disposed in the first housing 410, and the second substrate 452 may be located inside the second waterproof structure WP2 disposed in the second housing 420. The first substrate 451 and the second substrate 452 may be connected via the connecting member 400. The first portion 4001 of the connecting member 400 may be connected to the first substrate 451 located inside the first waterproof structure WP1 through the first insertion hole 311 formed in the first partition wall 310. The second portion 4002 of the connecting member 400 may be connected to the second substrate 452 located inside the second waterproof structure WP2 through the second insertion hole 321 formed in the second partition wall 320.

Meanwhile, external foreign substances or liquids may be introduced into the inside of the first waterproof structure WP1 and the second waterproof structure WP2 through the first insertion hole 311 and the second insertion hole 321. The external foreign substances or liquids may cause malfunction and/or damage to the first substrate 451 and the second substrate 452. To prevent such damage, the first insertion hole 311 and the second insertion hole 321 may be sealed through the brackets 330 and 340, the waterproof members 351 and 352, the first adhesive member 361, the second adhesive member 362, and a portion of the connecting member 400 (e.g., the first portion 4001 and the second part 4002). Therefore, the inflow of external liquids and/or foreign substances into the first area 301 where the first substrate 451 is located and the second area 302 where the second substrate 452 is located through the insertion holes 311 and 321 may be prevented or suppressed.

According to an embodiment, as described above, the waterproof members 351 and 352 may be inserted into the spaces between the brackets 330 and 340 and the partition walls 310 and 320 in the first direction. For example, the liquid waterproof members 351 and 352 may be filled into the spaces between the brackets 330 and 340 and the partition walls 310 and 320 in the first direction. Meanwhile, when the spaces between the partition walls 310 and 320 and the brackets 330 and 340 are viewed in the first direction, if the width or depth is narrowed in the order of the supports 332 and 342 of the bracket 330 and 340, the second adhesive member 362, the connecting member 400, and the first adhesive member 361, an area that is not willed with the waterproof member 351 or 352 may occur between the partition walls 310 and 320 and the brackets 330 and 340. Therefore, the insertion holes 311 and 321 may not be sealed by the waterproof members 351 and 352. According to an embodiment of the disclosure, as illustrated in FIG. 10B, when the spaces between the brackets 330 and 340 and the partition walls 310 and 320 are viewed in the first direction, the support portions 332 and 342 of the brackets 330 and 340, the second adhesive member 362, the connecting member 400, and the first adhesive member 361 may be formed with increasing width and depth in this order. For example, the first adhesive member 361 disposed on each of the first seating portion 312 and the second seating portion 322 may be formed in a size that includes each of the first portion 4001 and the second portion 4002 of the connecting member 400. The first portion 4001 and the second portion 4002 of the connecting member 400 may be formed to a size including the second adhesive member 362. The second adhesive member 362 may be formed to a size including the support member 332 or 342 of the bracket 330 or 340. In addition, in some embodiments, when the spaces between the brackets 330 and 340 and the partition walls 310 and 320 are viewed in the first direction, the support members 332 and 342 of the brackets 330 and 340, the second adhesive member 362, the connecting member 400, and the first adhesive member 361 may be formed to have substantially the same size. In this case, the waterproof members 351 and 352 may be filled in the spaces between the partition walls 310 and 320 and the brackets 330 and 340 by sequentially passing through the support members 332 and 342 of the brackets 330 and 340, the second adhesive member 362, the connecting member 400, and the first adhesive member 361. Therefore, the waterproof members 351 and 352 may seal the insertion holes 311 and 321.

According to an embodiment, as illustrated in FIGS. 11A and 11B, shielding members 371 and 372 may be disposed on the partition walls 310 and 320 to shield the insertion holes 311 and 321. The shielding members 371 and 372 may include a first shielding member 371 that shields a portion of the first insertion hole 311 and a second shielding member 372 that shields a portion of the second insertion hole 321. The shielding members 371 and 372 may be made of a material of rubber, urethane, silicone, or polymer series. The shielding members 371 and 372 may block the waterproof members 351 are 352 from flowing into the first area 301 of the housing (e.g., the seating portion 2251 in FIG. 4) or the second area 302 (e.g., the second space 2201 in FIG. 4) through the insertion holes 311 and 321 of the partition walls 310 and 320. In an embodiment, the first shielding member 371 may be disposed opposite to the surface of first partition wall 310 that faces the first bracket 330 to shield the first insertion hole 311. The second shielding member 372 may be disposed opposite to the surface of first partition wall 320 that faces the first bracket 340 to shield the first insertion hole 321. For example, the first shielding member 371 may be disposed to face the first bracket 330 to shield the first insertion hole 311. In addition, the second shielding member 372 may be disposed to face the second bracket 340 to shield the second insertion hole 321. Accordingly, the shielding members 371 and 372 may block external liquids or foreign substances from flowing into the first area 301 and the second area 302, which are waterproof areas of the housings 210 and 220.

According to an embodiment of the disclosure, an electronic device 200 (e.g., the electronic device 101 in FIG. 1) may include a first housing 210 or 225 including a first substrate 451 disposed therein and a first partition wall 310 that faces a portion of the first substrate, the first substrate having a first insertion hole 311 formed therein, a second housing 220 or 221 including a second substrate 452 disposed therein and a second partition wall 320 that faces a portion of the second substrate, the second partition wall having a second insertion hole 321 formed therein, and the second housing being slidably coupled to the first housing, a flexible display 230 disposed to be supported by the first housing and the second housing, the flexible display having a display area configured to be contracted or expanded based on slide-in or slide-out of the second housing, a connecting member 400 made of a bendable material, and having one end passing through the first insertion hole to be connected to the first substrate and the other end passing through the second insertion hole to be connected to the second substrate, a first bracket 330 disposed in the first housing to face the first insertion hole, and a first waterproof member 351 disposed between the first partition wall and the first bracket.

The electronic device may further include a second bracket 340 disposed in the second housing to face the second insertion hole, and a second waterproof member 352 disposed between the second partition wall and the second bracket.

In addition, the first partition wall may partition a first area 2251 or 301 of the first housing, in which the first substrate is disposed, and a variable area 2201 or 303 provided between the first housing and the second housing, and the second partition wall may partition a second area 2201 or 302 of the second housing, in which the second substrate is disposed, and the variable area.

The electronic device may further include a first waterproof structure WP1 disposed in the first area of the first housing, and a second waterproof structure WP2 disposed in the second area of the second housing.

The first insertion hole may be formed in the first partition wall in the direction corresponding to the sliding direction (e.g., the ± y-axis direction based on FIG. 2A) of the electronic device, and the second insertion hole may be formed in the second partition wall in the direction corresponding to the sliding direction of the electronic device.

The first partition wall of the first housing may include a first seating portion 312 on which the first bracket is seated and which is connected to the first insertion hole, and the second partition wall may include a second seating portion 322 on which the second bracket is seated and which is connected to the second insertion hole.

The first partition wall of the first housing may include a pair of first fixing portions 313 to fix the first bracket disposed on the first seating portion, and the second partition wall of the second housing may include a pair of second fixing portions 323 to fix the second bracket disposed on the second seating portion.

In addition, the first bracket may include a first protrusion 331 formed on a surface facing the first partition wall and in contact with the first partition wall, and the second bracket may include a second protrusion 341 formed on a surface facing the second partition wall and in contact with the second partition wall.

The first bracket may include a first support portion 332 disposed on the first seating portion to press the one end of the connecting member in a first direction, and the second bracket may include a second support portion 342 disposed on the second seating portion to press the other end of the connecting member in the first direction.

The electronic device may further include a first adhesive member 361 at least partially positioned in the first insertion hole to fix the one end of the connecting member to the first seating portion, and at least partially positioned in the second insertion hole to fix the other end of the connecting member to the second seating portion.

The electronic device may further a second adhesive member 362 disposed between the first support portion of the first bracket and the one end of the connecting member and between the second support portion of the second bracket and the other end of the connecting member.

When the flexible display is viewed in a first direction (e.g., the z-axis direction based on FIG. 4), the first support portion and the second support portion of the bracket, the second adhesive member, the one end and the other end of the connecting member, and the first adhesive member may increase in width or depth in that order.

The first bracket and the second bracket may be disposed not to overlap when the second housing is slid in with respect to the first housing.

The first waterproof member and the second waterproof member may include a semi-solid or liquid material, and may be filled in a space provided between the first bracket and the first partition wall and a space provided between the second bracket and the second partition wall.

The connecting member may be configured to be bent in response to the sliding operation of the electronic device.

The electronic device may further include a first shielding member 371 disposed to face the first bracket and shield the first insertion hole, and a second shielding member 372 disposed to face the second bracket and shield the second insertion hole.

The connecting member may include a first connector 401 that passes through the first insertion hole to be connected to the first substrate, a second connector 402 that passes through the second insertion hole to be connected to the second substrate, and a bending portion 403 that is at least partially bendable and connects the first connector and the second connector.

The connecting member may include a first reinforcement plate 410 disposed to face the first bracket and a second reinforcement plate 420 disposed to face the second bracket.

According to an embodiment of the disclosure, a waterproof structure may include a first housing 210 including a first substrate 451 disposed therein and a first partition wall 310 that faces a portion of the first substrate, the first substrate having a first insertion hole 311 formed therein, a second housing 220 including a second substrate 452 disposed therein and a second partition wall 320 that faces a portion of the second substrate, the second partition wall having a second insertion hole 321 formed therein, and the second housing being slidably coupled to the first housing, a flexible display 230 disposed to be supported by the first housing and the second housing, the flexible display having a display area configured to be contracted or expanded based on slide-in or slide-out of the second housing, a connecting member 400 made of a bendable material and having one end passing through the first insertion hole to be connected to the first substrate and the other end passing through the second insertion hole to be connected to the second substrate, a first bracket 330 including a first support portion 332 disposed in the first housing to press one end of the first connecting member in a first direction and facing the first insertion hole, and a first waterproof member 351 disposed between the first partition wall and the first bracket.

The electronic device may further include a second bracket 340 including a second support portion 342 disposed in the second housing to press the other end of the connecting member in a first direction and facing the second insertion hole, and a second waterproof member 352 disposed between the second partition wall and the second bracket.

According to an embodiment disclosed herein, it may be possible to provide a sealing structure that seals the insertion holes 311 and 321 through which the connecting member 400 passes while optimizing the layout of electronic components in the electronic device 200.

In addition, the area through which the connecting member 400 passes may be provided to correspond to the sliding direction of the electronic device 200, considering the sliding operation of the electronic device 200 and the layout of electronic components.

## Claims

1. An electronic device (200) comprising:
a first housing (210) comprising a first substrate (451) disposed therein and a first partition wall (310) that faces a portion of the first substrate (451), the first partition wall having a first insertion hole (311) formed therein;
a second housing (220) comprising a second substrate (452) disposed therein and a second partition wall (320) that faces a portion of the second substrate, the second partition wall having a second insertion hole (321) formed therein, and the second housing being slidably coupled to the first housing;
a flexible display (230) disposed to be supported by the first housing and the second housing, the flexible display having a display area configured to be contracted or expanded based on slide-in or slide-out of the second housing;
a connecting member (400) made of a bendable material, and having one end passing through the first insertion hole to be connected to the first substrate and a remaining end passing through the second insertion hole to be connected to the second substrate;
a first bracket (330) disposed in the first housing to face the first insertion hole; and
a first waterproof member (351) disposed between the first partition wall and the first bracket.

2. The electronic device of claim 1, further comprising:
a second bracket (340) disposed in the second housing to face the first insertion hole; and
a second waterproof member (352) disposed between the second partition wall and the second bracket.

3. The electronic device of claim 2, wherein the first partition wall partitions a first area (2251, 301) of the first housing, in which the first substrate is disposed, and a variable area (2201, 303) provided between the first housing and the second housing, and
wherein the second partition wall partitions a second area (2201, 302) of the second housing, in which the second substrate is disposed, and the variable area.

4. The electronic device of claim 3, further comprising:
a first waterproof structure (WP1) disposed in the first area of the first housing; and
a second waterproof structure (WP2) disposed in the second area of the second housing.

5. The electronic device of claim 2, wherein the first insertion hole is formed in the first partition wall in a direction corresponding to a sliding direction of the electronic device, and
wherein the second insertion hole is formed in the second partition wall in the direction corresponding to the sliding direction of the electronic device.

6. The electronic device of claim 2, wherein the first partition wall of the first housing comprises a first seating portion (312) on which the first bracket is seated and which is connected to the first insertion hole, and
wherein the second partition wall comprises a second seating portion (322) on which the second bracket is seated and which is connected to the second insertion hole.

7. The electronic device of claim 6, wherein the first partition wall of the first housing comprises a pair of first fixing portions (313) to fix the first bracket disposed on the first seating portion, and
wherein the second partition wall of the second housing comprises a pair of second seating portions (323) to fix the second bracket disposed on the second seating portion.

8. The electronic device of claim 6, wherein the first bracket comprises a first support portion (332) disposed on the first seating portion to press the one end of the connecting member in a first direction, and
wherein the second bracket comprises a second support portion (342) disposed on the second seating portion to press the remaining end of the connecting member in the first direction.

9. The electronic device of claim 6, further comprising:
a first adhesive member (361) at least partially positioned in the first insertion hole to fix the one end of the connecting member to the first seating portion, and at least partially positioned in the second insertion hole to fix the remaining end of the connecting member to the second seating portion.

10. The electronic device of claim 9, further comprising:
a second adhesive member (362) disposed between the first support portion of the first bracket and the one end of the connecting member and between the second support portion of the second bracket and the remaining end of the connecting member.

11. The electronic device of claim 10, wherein, when the flexible display is viewed in a first direction, the first support portion and the second support portion of the bracket, the second adhesive member, the one end and the remaining end of the connecting member, and the first adhesive member increase in width or depth in that order.

12. The electronic device of claim 2, wherein the first bracket and the second bracket are disposed not to overlap when the second housing is slid in with respect to the first housing.

13. The electronic device of claim 2, wherein the first waterproof member and the second waterproof member comprise a semi-solid or liquid material, and are filled in a space provided between the first bracket and the first partition wall and a space provided between the second bracket and the second partition wall.

14. The electronic device of claim 2, further comprising:
a first shielding member (371) disposed to face the first bracket and to shield the first insertion hole; and
a second shielding member (372) disposed to face the second bracket and to shield the second insertion hole.

15. The electronic device of claim 2, wherein the connecting member comprises a first reinforcement plate (410) disposed to face the first bracket and a second reinforcement plate (420) disposed to face the second bracket.
